# EUROPEAN PATENT APPLICATION

(11) **EP 4 604 045 A1**
(43) Date of publication of application: **20.08.2025**
(21) Application number: 23917923.7
(22) Date of filing: 27.12.2023
(51) Int. Cl.: G06Q 50/10, A63B 24/00, A63B 71/06, G06F 3/04815, G06F 11/36

(54) **ELECTRONIC DEVICE AND METHOD FOR GENERATING EXERCISE-RELATED CONTENT USING SAME**

(30) Priority: 16.01.2023 KR 20230006277; 16.02.2023 KR 20230020661
(71) Applicant: Samsung Electronics Co., Ltd., Suwon-si, Gyeonggi-do 16677 (KR)
(72) Inventor: EUN, Huiyu, Suwon-si, Gyeonggi-do 16677 (KR); SON, Seungha, Suwon-si, Gyeonggi-do 16677 (KR); SONG, Doohwan, Suwon-si, Gyeonggi-do 16677 (KR); LEE, Sumin, Suwon-si, Gyeonggi-do 16677 (KR); CHUNG, Juyun, Suwon-si, Gyeonggi-do 16677 (KR)
(74) Representative: Walaski, Jan Filip
(86) International application number: PCT/KR2023/021682
(87) International publication number: WO 2024/154971

(57) **Abstract**

According to various embodiments of the present disclosure, an electronic device comprises: a display, memory storing instructions, and a processor, wherein the instructions may, when executed by the processor, cause the electronic device to: display, on the display, a user interface including at least one object; generate a virtual space related to at least one exercise by using the at least one object; create logic for content related to an exercise to be performed by using the at least one object arranged in the virtual space; on the basis of an input of selecting one of at least one exercise device to be used with the created logic, obtain at least one piece of exercise data for the selected exercise device; perform debugging of the created logic by using the at least one piece of obtained exercise data; and generate exercise-related content on the basis of the logic and store the generated exercise-related content in the memory. In addition to various embodiments disclosed in the present document, various other embodiments may be possible.

## Description

### [Technical Field]

An embodiment of the disclosure relates to an electronic device and a method of producing an exercise-related content using the same.

### [Background Art]

An electronic device such as a smartphone, a tablet, a TV, a set-top box, may have a communication connection with an external electronic device including a sensor capable of measuring a user's biometric information and/or exercise data. In this instance, the electronic device may receive the user's biometric information and/or exercise data from the external electronic device. The electronic device may execute an exercise-related content (e.g., game) using the received user's biometric information and/or exercise data. The exercise-related content may be produced by the user of the electronic device by using a standardized object.

The above-described information may be provided as a background art (related art) for helping understanding of the disclosure. There is no opinion or determination suggested in association with whether any of the above description is applicable as the prior art related to the disclosure.

### [Disclosure of Invention]

### [Technical Problem]

An exercise-related content may need to be produced using an exercise performed by a user and exercise data related thereto, as opposed to using a standardized object.

An electronic device according to an embodiment of the disclosure may produce an exercise-related content using a user's biometric information and/or exercise data received from an external electronic device connected for communication.

### [Solution to Problem]

An electronic device according to an embodiment of the disclosure may include a display, memory storing instructions, and a processor. The instructions according to an embodiment, when executed by the processor, may cause the electronic device to display a user interface including at least one object on the display. The instructions according to an embodiment, when executed by the processor, may cause the electronic device to generate a virtual space related to at least one exercise by using the at least one object. The instructions according to an embodiment, when executed by the processor, may cause the electronic device to write logic of an exercise-related content to be performed using the at least one object disposed in the virtual space. The instructions according to an embodiment, when executed by the processor, may cause the electronic device to obtain at least one piece of exercise data associated with a selected exercise device based on an input to select one from at least one exercise device to be performed based on the written logic. The instructions according to an embodiment, when executed by the processor, may cause the electronic device to perform debugging of the written logic by using the at least one piece of obtained exercise data. The instructions according to an embodiment, when executed by the processor, may cause the electronic device to generate an exercise-related content based on the logic and store the generated exercise-related content in the memory.

A method of producing an exercise-related content by an electronic device according to an embodiment of the disclosure may include an operation of displaying a user interface including at least one object on a display. The method of producing the exercise-related content by the electronic device according to an embodiment may include an operation of generating a virtual space related to at least one exercise by using the at least one object. The method of producing the exercise-related content by the electronic device according to an embodiment may include an operation of obtaining at least one piece of exercise data associated with a selected exercise device based on an input to select one from at least one exercise device to be performed based on the written logic. The method of producing the exercise-related content by the electronic device according to an embodiment may include an operation of performing debugging of the written logic by using the at least one piece of obtained exercise data. The method of producing the exercise-related content by the electronic device according to an embodiment may include an operation of generating an exercise-related content based on the logic, and storing the generated exercise-related content.

According to an embodiment of the disclosure, a non-transitory computer-readable storage medium (or computer program product) storing one or more programs may be described. The one or more programs according to an embodiment may include an instruction which, when executed by a processor of an electronic device, displays a user interface including at least one object on a display. The one or more programs according to an embodiment may include an instruction which, when executed by a processor of an electronic device, generates a virtual space related to at least one exercise by using the at least one object. The one or more programs according to an embodiment may include an instruction which, when executed by a processor of an electronic device, writes logic of an exercise-related content to be performed by using the at least one object disposed in the virtual space. The one or more programs according to an embodiment may include an instruction which, when executed by a processor of an electronic device, obtains at least one piece of exercise data associated with a selected exercise device, based on an input to select one from at least one exercise device to be performed based on the written logic. The one or more programs according to an embodiment may include an instruction which, when executed by a processor of an electronic device, performs debugging of the written logic by using the at least one piece of obtained exercise data. The one or more programs according to an embodiment may include an instruction which, when executed by a processor of an electronic device, generates an exercise-related content based on the logic, and stores the generated exercise-related content.

### [Advantageous Effects of Invention]

An electronic device according to an embodiment of the disclosure may produce an exercise-related content by using a user's biometric information and/or exercise data received from an external electronic device connected for communication, as opposed to using a standardized object when producing an exercise-related content. Accordingly, a user who produces a content may produce various exercise-related contents creatively, for example, according to one's personal preference and play style. In addition, various exercise-related contents produced by the user may be usable via a metaverse that connects the real world and a virtual world as contactless environment-based activities are popularized.

### [Brief Description of Drawings]

FIG. 1 is a block diagram illustrating an electronic device in a network environment according to an embodiment of the disclosure;
FIG. 2 is a block diagram illustrating an electronic device, an external electronic device, and a server according to an embodiment of the disclosure;
FIG. 3 is a block diagram illustrating the electronic device of FIG. 2 according to an embodiment of the disclosure;
FIG. 4 is a block diagram illustrating the external electronic device of FIG. 2 according to an embodiment of the disclosure;
FIG. 5 is a flowchart illustrating a method of producing an exercise-related content according to an embodiment of the disclosure;
FIG. 6 is a diagram illustrating a user interface for generating a virtual space according to an embodiment of the disclosure;
FIG. 7 is a diagram illustrating a method of generating a virtual space according to an embodiment of the disclosure;
FIG. 8 is a diagram illustrating a method of writing logic of an exercise-related content according to an embodiment of the disclosure;
FIGS. 9A, 9B, and 9C are diagrams illustrating a method of writing logic of an exercise-related content according to an embodiment of the disclosure;
FIG. 10 is a diagram illustrating a generated virtual space according to an embodiment of the disclosure;
FIGS. 11A, 11B, and 11C are diagrams illustrating a method of writing logic of an exercise-related content according to an embodiment of the disclosure;
FIGS. 12A and 12B are diagrams illustrating a method of writing logic of an exercise-related content according to an embodiment of the disclosure;
FIG. 13 is a diagram illustrating a method of obtaining exercise data according to an embodiment of the disclosure;
FIGS. 14A and 14B are diagrams illustrating methods of obtaining exercise data according to an embodiment of the disclosure;
FIG. 15 is a diagram illustrating a method of producing an exercise-related content according to an embodiment of the disclosure;
FIGS. 16A and 16B are diagrams illustrating methods of obtaining exercise data according to an embodiment of the disclosure;
FIG. 17 is a diagram illustrating a method of producing an exercise-related content according to an embodiment of the disclosure;
FIG. 18 is a diagram illustrating a method of producing an exercise-related content according to an embodiment of the disclosure;
FIG. 19 is a flowchart illustrating a method of executing an exercise-related content according to an embodiment of the disclosure;
FIG. 20 is a diagram illustrating a method of executing an exercise-related content according to an embodiment of the disclosure;
FIG. 21 is a diagram illustrating a method of executing an exercise-related content according to an embodiment of the disclosure;
FIG. 22 is a diagram illustrating a method of executing an exercise-related content according to an embodiment of the disclosure; and
FIG. 23 is a diagram illustrating a method of executing an exercise-related content according to an embodiment of the disclosure.

### [Mode for the Invention]

Hereinafter, embodiments of the disclosure will be described in detail with reference to enclosed drawings, so that those skilled in the art could easily implement the embodiments. However, the disclosure could be implemented in different manners, and is not limited to the embodiments described below. Identical or like reference numerals in the drawings denote identical or like elements. In addition, a description of a well-known function and configuration may be omitted in the drawings and related descriptions for clarity and simplicity.

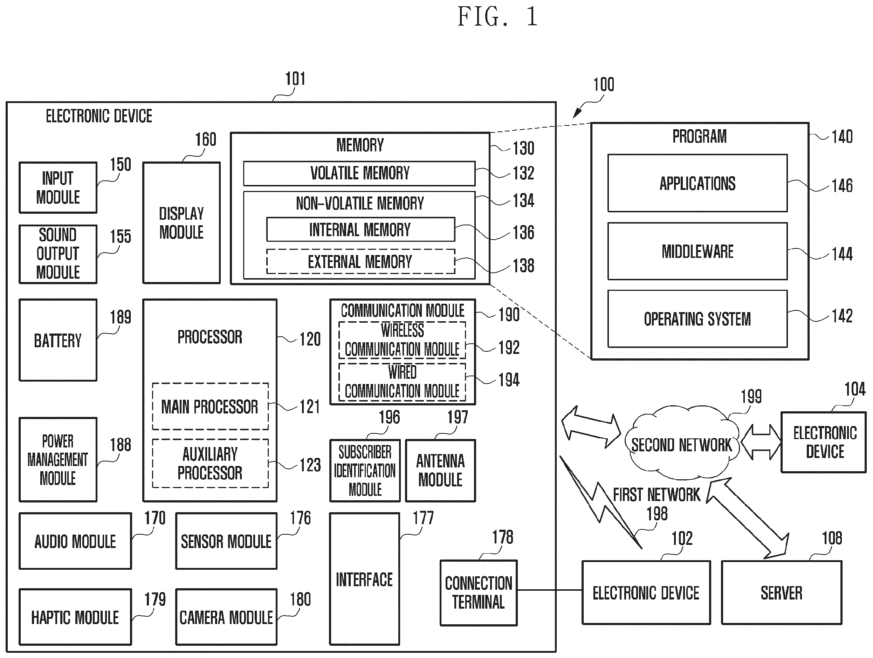

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internetof-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

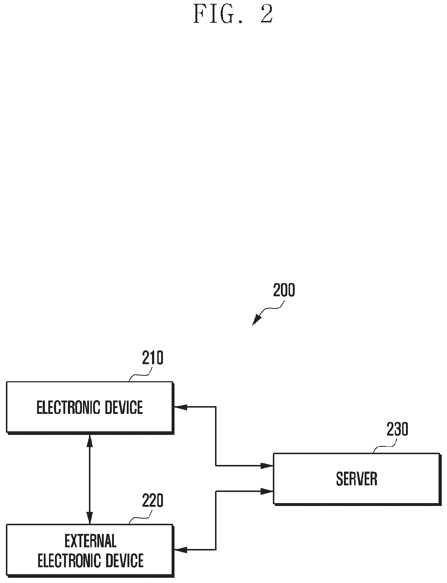

FIG. 2 is a block diagram 200 illustrating an electronic device 210, an external electronic device 220, and a server 230 according to an embodiment of the disclosure.

Referring to FIG. 2, the electronic device 210 and the external electronic device 220 may include at least some of the components of the electronic device 101 of FIG. 1.

According to an embodiment, a system for generating (or producing) an exercise-related content may include the electronic device 210, the external electronic device 220, and the server 230. However, the disclosure is not limited thereto, and is a system for generating (or producing) an exercise-related content, and at least one of the electronic device 210, the external electronic device 220, and the server 230 may be omitted.

According to an embodiment, the electronic device 210 and the external electronic device 220 may include components independent from each other or the external electronic device 220 may be configured to be included in the electronic device 210. However, the disclosure is not limited thereto.

According to an embodiment, the electronic device 210 may be a device for generating (e.g., producing) an exercise-related content. For example, the electronic device 210 may be a portable and/or mobile electronic device such as a smartphone, a tablet PC, a portable multimedia player (PMP), a personal digital assistant (PDA), a laptop PC, and a wearable electronic device. However, the disclosure is not limited thereto.

According to an embodiment, the external electronic device 220 may be a device capable of obtaining (or measuring) exercise data.

According to an embodiment, exercise data may include a heart rate, a pace (e.g., velocity), the number of steps, a distance, a cadence, a gradient, an altitude, calories, an exercise time, the number of times of exercises performed, a weight, a strength, a maximal oxygen consumption (Vo2Max), an exercise posture type, the accuracy of an exercise posture, and/or a time spent holding an exercise posture. However, the disclosure is not limited thereto.

According to an embodiment, the external electronic device 220 may be an exercise device (e.g., exercise machines such as a treadmill, a cycle, or the like), a wearable electronic device (e.g., smart watch), smart glasses, augmented reality (AR) glasses, or a camera device (e.g., camera device to obtain image data (e.g., image data of a user doing an exercise). However, the disclosure is not limited thereto.

According to an embodiment, the electronic device 210 and the external electronic device 220 may be connected for communication via short-range wireless communication (e.g., Bluetooth, Bluetooth low energy (BLE), Wi-Fi, Wi-Fi Direct, Wi-Fi Aware, or ultra-wide band (UWB)). However, the disclosure is not limited thereto.

According to an embodiment, the electronic device 210 may obtain exercise data from the external electronic device 220 connected for communication via short-range wireless communication. The disclosure is not limited thereto, and the electronic device 210 may obtain exercise data from the server 230.

According to an embodiment, the electronic device 210 may generate (or produce) an exercise-related content based on exercise data obtained from the external electronic device 220 and/or the server 230.

According to an embodiment, the electronic device 210 may receive, from the server 230, at least one component (or module) for generating (or producing) and/or executing an exercise-related content according to an embodiment of the disclosure. For example, the at least one component (or module) may be at least one functional unit including a module for configuring (or operating) a virtual space, a module for generating an object that constitutes a virtual object, and/or a module for producing exercise data. At least some of functional parts may be a hardware module (e.g., circuitry), and may be included in the electronic device 210, and/or may be embodied as software including one or more instructions executed by the electronic device 210. For example, operations performed by the electronic device 210 may be stored in a memory of the electronic device 210, and may be implemented by instructions which, when executed, cause a processor of the electronic device 210 to perform operations.

The disclosure is not limited thereto, and at least one component (or module) for generating (or producing) and/or executing an exercise-related content may be stored in the memory of the electronic device 210. The electronic device 210 may generate (or produce) and/or execute an exercise-related content by using at least one component (or module).

According to an embodiment, the electronic device 210 may store a generated exercise-related content in a memory. For example, the generated exercise-related content may be a packaged exercise-related content, and may include, for example, all components capable of executing an exercise-related content, for example, logic, an object, a virtual space, an item, a sound, and/or an interface. When the generated exercise-related content is stored in the memory of the electronic device 210, the electronic device 210 may share the exercise-related content with at least one external electronic device. For example, the electronic device 210 may receive, from at least one external electronic device, a signal that requests downloading an exercise-related content, and may transmit an exercise-related content to the at least one external electronic device that requests downloading the exercise-related content, in response to the request.

The disclosure is not limited thereto, and the electronic device 210 may transmit the generated exercise-related content to the server 230. The server 230 may store the exercise-related content received from the electronic device 210. The exercise-related content may be classified based on a predefined category and may be stored in the server 230. When the generated exercise-related content is stored in the server 230, a client electronic device, for example, the electronic device 210 and/or the external electronic device 220, may download the exercise-related content from the server 230, and may install and execute the same.

The above-described exercise-related content according to an embodiment may be replaced with a term, such as an exercise-related game, an exercise-related program, an exercise-related virtual reality game, and/or an exercise-related virtual reality program, or the like.

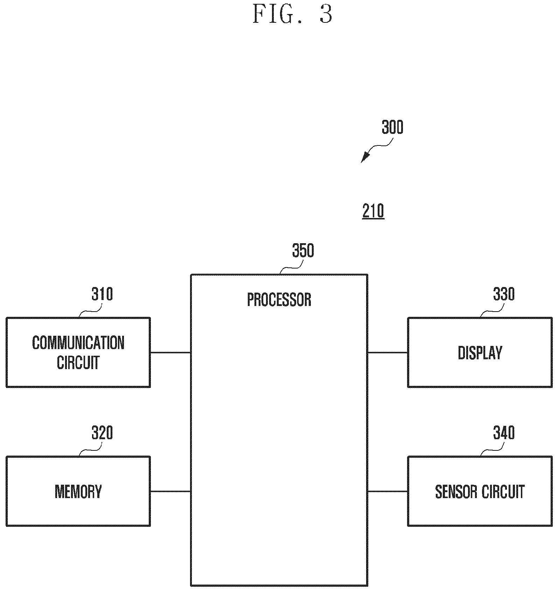

FIG. 3 is a block diagram 300 illustrating the electronic device 210 of FIG. 2 according to an embodiment of the disclosure.

Referring to FIG. 3, the electronic device 210 (e.g., electronic device 101 of FIG. 1) may include a communication circuit 310 (e.g., communication module 190 of FIG. 1), a memory 320 (e.g., memory 130 of FIG. 1), a display 330 (e.g., display module 160 of FIG. 1), a sensor circuit 340 (e.g., sensor module 176 of FIG. 1), and/or a processor 350 (e.g., processor 120 of FIG. 1).

According to various embodiments, the communication circuit 310 (e.g., communication module 190 of FIG. 1) may establish a communication channel with an external electronic device (e.g., external electronic device 220 of FIG. 2) and/or a server (e.g., server 230 of FIG. 2), and may support various data transmission or reception with the external electronic device 220 and/or server 230.

According to an embodiment, the communication circuit 310 may support short-range wireless communication. For example, the short-range wireless communication may include Bluetooth, Bluetooth low energy (BLE), Wi-Fi, Wi-Fi Direct, Wi-Fi Aware, or ultra-wide band (UWB). The disclosure is not limited thereto, and the communication circuit 310 may support wired communication.

According to various embodiments, the memory 320 (e.g., the memory 130 of FIG. 1) may perform a function of storing a program (e.g., program 140 of FIG. 1) for processing and controlling the processor 350, an operating system (OS) (e.g., operating system 142 of FIG. 1), various applications, and/or input/output data, and may store a program of controlling the overall operations of the electronic device 210. The memory 320 may store various instructions executable by the processor 350.

According to an embodiment, the memory 320 may store instructions for generating a virtual space by using at least one object, under the control of the processor 350. The memory 320 may store instructions for writing logic of an exercise-related content to be performed using at least one object disposed in a virtual space. The memory 320 may store instructions for obtaining at least one piece of exercise data for a selected exercise device, based on an input to select one from at least one exercise device to be performed based on written logic. The memory 320 may store instructions for performing debugging of written logic by using at least one piece of obtained exercise data, generating an exercise-related content based on the logic, and storing the generated exercise-related content. The memory 320 may store instructions for executing an exercise-related content, and displaying a screen associated with a virtual space corresponding to the executed exercise-related content. The memory 320 may store instructions for obtaining exercise data of the electronic device 210 and/or exercise data of the external electronic device 220, and for changing, based on the obtained exercise data, at least one object constituting a virtual space corresponding to an executed exercise-related content.

According to various embodiments, the display 330 (e.g., display module 160 of FIG. 1) may display an image under the control of the processor 350, and may be embodied as any one of a liquid crystal display (LCD), a light-emitting diode (LED) display, an organic light-emitting diode (OLED) display, or a micro electro mechanical systems (MEMS) display, an electronic paper display, a flexible display, a foldable display, or a rollable display. However, the disclosure is not limited thereto.

According to an embodiment, the display 330 may display a user interface for generating a virtual space, under the control of the processor 350. The display 330 may display a user interface for writing logic of at least one exercise-related content to be performed using at least one object disposed in a virtual space, under the control of the processor 350. The display 330 may display a user interface for obtaining exercise data for at least one exercise device, under the control of the processor 350.

According to various embodiments, the sensor circuit 340 (e.g., sensor module 176 of FIG. 1) may include a motion sensor. The motion sensor may include an acceleration sensor and/or a gyro sensor. The disclosure is not limited thereto, and the sensor circuit 340 may further include a biometric sensor for obtaining a user's biometric information.

According to an embodiment, the motion sensor, for example, an acceleration sensor and/or gyro sensor may sense a motion and/or inertia of the electronic device 210. The processor 350 may obtain exercise data based on a motion sensor signal obtained from the acceleration sensor and/or gyro sensor. For example, the processor 350 may analyze a motion sensor signal and may obtain exercise data including an exercise time, the number of times of exercises performed, a velocity, and/or calories. However, the disclosure is not limited thereto.

According to an embodiment, the biometric sensor may obtain a user's biometric information. The biometric information may include a heart rate and/or a maximum oxygen consumption. However, the disclosure is not limited thereto.

According to various embodiments, the processor 350 may include, for example, a micro controller unit (MCU), and may operate an operating system (OS) or an embedded software program so as to control a plurality of hardware components connected to the processor 350. The processor 350, for example, may control a plurality of hardware components according to instructions (e.g., program 140 of FIG. 1) stored in the memory 320.

According to an embodiment, the processor 350 may display a user interface including at least one object on the display 330. The processor 350 may generate a virtual space related to at least one exercise by using at least one object. The at least one object may include a 2D object and/or a 3D object. The at least one object may be classified by category and may be displayed. Based on detecting an input to select one from at least one object, the processor 350 may dispose the selected object in a virtual space.

According to an embodiment, the processor 350 may write logic of an exercise-related content to be performed using at least one object disposed in a virtual space. For example, the logic of the exercise-related content may be written via at least one of a script scheme or a block coding scheme. However, the disclosure is not limited thereto. Based on an input to select one from at least one exercise device to be performed based on written logic, the processor 350 may obtain at least one piece of exercise data for the selected exercise device. The disclosure is not limited thereto, and at least one piece of exercise data may be stored, in advance, in the memory 320 or the server 230. Upon detection of an input to obtain at least one piece of exercise data stored in the memory 320 or the server 230, the processor 350 may obtain at least one piece of exercise data from the memory 320 or the server 230.

According to an embodiment, the processor 350 may perform debugging of written logic by using at least one piece of obtained exercise data, may generate an exercise-related content based on the logic, and may store the generated exercise-related content. For example, the processor 350 may generate an exercise-related content based on a debugging result, and may store the generated exercise-related content. For example, when the debugging result shows that no error occurs, the processor 350 may generate an exercise-related content based on the logic. When the debugging result shows that an error occurs, the processor 350 may identify logic with an error, may correct the logic with the error, and may perform debugging the corrected logic again.

The electronic device 210 according to various embodiments may not include the display 330 and the sensor circuit 340. When the electronic device 210 is not equipped with the display 330, the electronic device 210 may be connected to a display device (not illustrated) for communication via the communication circuit 310. The electronic device 210 may transmit, to the display device (not illustrated) connected for communication, information related to a user interface for producing an exercise-related content and a user interface for executing an exercise-related content. Based on the information received from the electronic device 210, the display device (not illustrated) may display a user interface for producing an exercise-related content and a user interface for executing an exercise-related content.

The electronic device 210 according to an embodiment may include the display 330, the memory 320 storing instructions, and the processor 350. The instructions according to an embodiment, when executed by the processor 350, may cause the electronic device 210 to display a user interface including at least one object on the display 330. The instructions according to an embodiment, when executed by the processor 350, may cause the electronic device 210 to generate a virtual space related to at least one exercise by using at least one object. The instructions according to an embodiment, when executed by the processor 350, may cause the electronic device 210 to write logic of an exercise-related content to be performed by using at least one object disposed in the virtual space. The instructions according to an embodiment, when executed by the processor 350, may cause the electronic device 210 to obtain at least one piece of exercise data associated with a selected exercise device based on an input to select one from at least one exercise device to be performed based on the written logic. The instructions according to an embodiment, when executed by the processor 350, may cause the electronic device 210 to perform debugging of the written logic by using the at least one piece of obtained exercise data. The instructions according to an embodiment, when executed by the processor 350, may cause the electronic device 210 to generate an exercise-related content based on the logic, and store the generated exercise-related content in the memory 320.

The electronic device 210 according to an embodiment may further include the communication circuit 310. The at least one exercise device according to an embodiment may include at least one of: at least one exercise device connected for communication via the communication circuit 310, a virtual exercise device, or at least one exercise device having a communication connection with the server 230.

The instructions according to an embodiment, when executed by the processor 350, may cause the electronic device 210 to obtain at least one piece of measured exercise data from at least one selected exercise device when an input to select at least one exercise device connected for communication via the communication circuit 310 among the at least one exercise device is detected.

The instructions according to an embodiment, when executed by the processor 350, may cause the electronic device 210 to obtain at least one piece of exercise data configured for the virtual exercise device when an input to select the virtual exercise device among the at least one exercise device is detected.

The instructions according to an embodiment, when executed by the processor 350, may cause the electronic device 210 to receive, via the server 230, at least one piece of exercise data measured by at least one exercise device having a communication connection with the server 230 so as to obtain the at least one piece of exercise data, when an input to select at least one exercise device having a communication connection with the server 230 among the at least one exercise device is detected.

The instructions according to an embodiment, when executed by the processor 350, may cause the electronic device 210 to obtain at least one piece of exercise data from the memory 320 or the server 230 when an input to obtain at least one piece of exercise data stored in the memory 320 or the server 230 is detected after the logic is written.

The instructions according to an embodiment, when executed by the processor 350, may cause the electronic device 210 to write logic of the exercise-related content by using at least one of a script scheme or a block coding scheme.

The instructions according to an embodiment, when executed by the processor 350, may cause the electronic device 210 to generate the exercise-related content based on the logic when a debugging result shows that no error occurs.

The instructions according to an embodiment, when executed by the processor 350, may cause the electronic device 210 to identify logic with an error when the debugging result shows that an error occurs. The instructions according to an embodiment, when executed by the processor 350, may cause the electronic device 210 to correct the logic with the error. The processor 350 according to an embodiment may perform debugging of the corrected logic.

The instructions according to an embodiment, when executed by the processor 350, may cause the electronic device 210 to upload the generated exercise-related content to the server 230, and store the generated exercise-related content in the server 230.

The instructions according to an embodiment, when executed by the processor 350, may cause the electronic device 210 to display a screen associated with a virtual space corresponding to an executed exercise-related content on the display 330 based on execution of the stored exercise-related content. The instructions according to an embodiment, when executed by the processor 350, may cause the electronic device 210 to obtain at least one of first exercise data associated with the electronic device 210 or second exercise data associated with the at least one exercise device. The instructions according to an embodiment, when executed by the processor 350, may cause the electronic device 210 to change at least one object included in the virtual space according to logic corresponding to the executed exercised-related content, based on the at least one of the obtained first exercise data or the obtained second exercise data.

The instructions according to an embodiment, when executed by the processor 350, may cause the electronic device 210 to obtain at least one of the first exercise data associated with the electronic device 210 or the second exercise data associated with the at least one exercise device at designated time intervals.

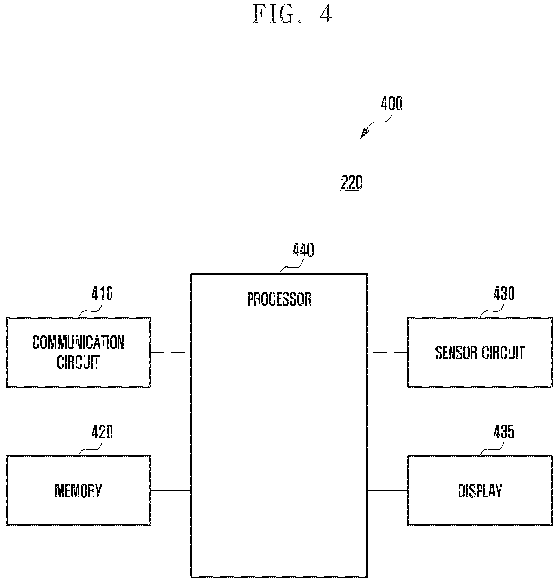

FIG. 4 is a block diagram 400 illustrating the external electronic device 220 of FIG. 2 according to an embodiment of the disclosure.

Referring to FIG. 4, the external electronic device 220 (e.g., electronic device 101 of FIG. 1) may include a communication circuit 410 (e.g., communication module 190 of FIG. 1), a memory 420 (e.g., memory 130 of FIG. 1), a sensor circuit 430, a display 435 (e.g., display module 160 of FIG. 1), and/or a processor 440 (e.g., processor 120 of FIG. 1).

According to various embodiments, the communication circuit 410 (e.g., communication module 190 of FIG. 1) may establish a communication channel with an electronic device (e.g., electronic device 210 of FIG. 2) and/or a server (e.g., server 230 of FIG. 2), and may support various data transmission or reception with the electronic device 210 and/or the server 230.

According to an embodiment, the communication circuit 410 may support short-range wireless communication. For example, the short-range wireless communication may include Bluetooth, Bluetooth low energy (BLE), Wi-Fi, Wi-Fi Direct, Wi-Fi Aware, or ultra-wide band (UWB). The disclosure is not limited thereto, and the communication circuit 410 may support wired communication.

According to various embodiments, the memory 420 (e.g., memory 130 of FIG. 1) may perform a function of storing a program (e.g., program 140 of FIG. 1) for processing and controlling the processor 440, an operating system (OS) (e.g., operating system 142 of FIG. 1), various applications, and/or input/output data, and may store a program of controlling the overall operations of the external electronic device 220. The memory 420 may store various instructions executable by the processor 440.

According to an embodiment, the memory 420 may store measured exercise data under the control of the processor 440. The memory 420 may store instructions for transmitting measured exercise data to the electronic device 210 at designated time intervals.

According to various embodiments, the sensor circuit 430 may include a motion sensor. The motion sensor may include an acceleration sensor and/or a gyro sensor. The disclosure is not limited thereto, and the sensor circuit 430 may further include a biometric sensor for obtaining a user's biometric information.

According to an embodiment, the motion sensor, for example, an acceleration sensor and/or gyro sensor may sense a motion and/or inertia of the external electronic device 220. The processor 440 may obtain exercise data based on a motion sensor signal obtained from the acceleration sensor and/or gyro sensor. For example, the processor 440 may analyze a motion sensor signal and may obtain exercise data including an exercise time, the number of times of exercises performed, a velocity, and/or calories, and may transmit the same to the electronic device 210.

According to an embodiment, the biometric sensor may obtain a user's biometric information. The biometric information may include a heart rate and/or a maximum oxygen consumption. However, the disclosure is not limited thereto. According to an embodiment, the processor 440 may transmit, to the electronic device 210, biometric information obtained via the biometric sensor as exercise data.

As described with reference to FIG. 2, the external electronic device 220 may be a wearable electronic device, for example, a smart watch, smart glasses, or AR glasses. In this instance, the external electronic device 220 may include the display 435.

According to an embodiment, the display 435 may display an image under the control of the processor 440. For example, the display 435 may display a user interface related to exercise data, under the control of the processor 440. The display 435 may display a user interface related to execution of an exercise-related content, under the control of the processor 440.

According to various embodiments, the processor 440 may include, for example, a micro controller unit (MCU), and may operate an operating system (OS) or an embedded software program so as to control a plurality of hardware components connected to the processor 440. The processor 440 may control a plurality of hardware components, for example, according to instructions (e.g., program 140 of FIG. 1) stored in the memory 420.

According to an embodiment, the processor 440 may measure (or obtain) exercise data via the sensor circuit 430 at designated time intervals. The processor 440 may store the measured exercise data in the memory 420. The memory 440 may transmit measured exercise data to the electronic device 210 at designated time intervals.

According to various embodiments, although not illustrated, the external electronic device 220 may include a camera. In this instance, the external electronic device 220 may obtain image data associated with a user doing an exercise by using the camera. For example, the image of the user doing an exercise may be used to identify the user's exercise posture and/or the number of times of exercises performed. The external electronic device 220 may transmit, to the electronic device 210, the image data obtained via the camera in association with the user doing an exercise.

The disclosure is not limited thereto, and the external electronic device 220 may be a camera device. The camera device may obtain image data associated with a user doing an exercise and may transmit the same to the electronic device 210.

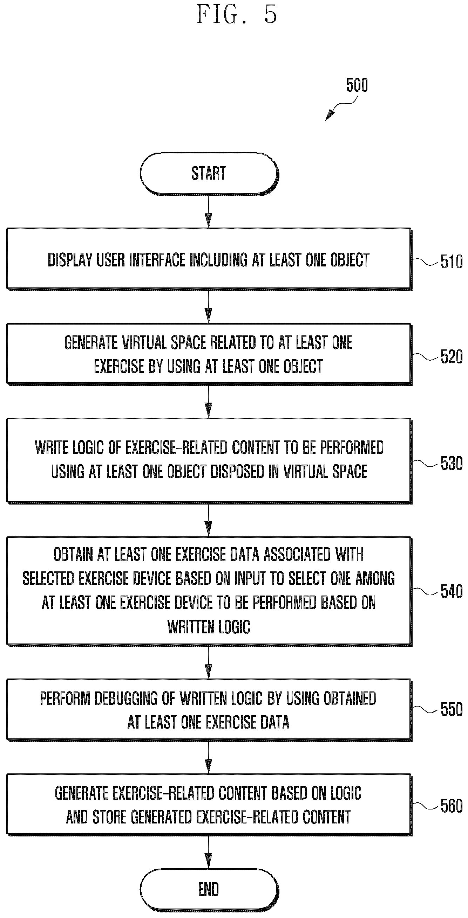

FIG. 5 is a flowchart 500 illustrating a method of producing an exercise-related content according to an embodiment of the disclosure.

In the embodiment provided hereinafter, operations may be performed sequentially, but the order is not necessarily sequential. For example, the order of operations may be changed, and at least two operations may be performed in parallel.

According to an embodiment, it is understood that operations 510 to 560 are performed by a processor (e.g., the processor 350 of FIG. 3) of an electronic device (e.g., the electronic device 210 of FIGS. 2 and 3).

Referring to FIG. 5, the processor 350 may display a user interface including at least one object in operation 510. In operation 520, the processor 350 may generate a virtual space related to at least one exercise by using at least one object.

According to an embodiment, the at least one object may include a 2D object and/or 3D object. The at least one object may be classified by category and may be displayed.

According to an embodiment, the user interface may include a virtual space. Based on detection of an input to select one from at least one object, the processor 350 may dispose the selected object in the virtual space. The disclosure is not limited thereto, and the processor 350 may dispose at least one object in the virtual space by using an input that selects and drags the object into the virtual space.

According to an embodiment, the object disposed in the virtual space may be editable. For example, the processor 350 may perform an object editing function such as changing a position where an object is disposed in the virtual space, and/or changing a scale of an object. However, the disclosure is not limited thereto.

The above-described operation, according to various embodiments, that selects an object and disposes the selected object in the virtual space may be repeatedly performed. Accordingly, a plurality of objects may be disposed in the virtual space and the virtual space in which a plurality of objects are disposed may be generated.

According to an embodiment, in operation 530, the processor 350 may write logic of an exercise-related content to be performed using at least one object disposed in the virtual space. For example, logic may be a series of processes of automatically performing an exercise-related content according to a determined rule.

According to an embodiment, the logic of the exercise-related content may be written via at least one of a script scheme or a block coding scheme. However, the disclosure is not limited thereto.

According to an embodiment, in operation 540, based on an input to select one from at least one exercise device to be performed based on the written logic, the processor 350 may obtain at least one piece of exercise data for the selected exercise device.

According to an embodiment, the user interface may include a list of exercise devices. Upon detection of an input to select one of the exercise devices in the exercise device list displayed in the user interface, the processor 350 may obtain at least one piece of exercise data for the selected exercise device.

According to an embodiment, the at least one exercise device may include the external electronic device 220 of FIG. 2 and FIG. 4 described above. For example, the at least one exercise device may include at least one of an exercise device having a communication connection with the electronic device 210 via a short-range communication circuit, a virtual exercise device, or an exercise device having a communication connection with a server (e.g., server 230 of FIG. 2).

According to an embodiment, upon detection of an input to select the exercise device having a communication connection with the electronic device 210 via a short-range communication circuit among the at least one exercise device, the processor 350 may obtain at least one piece of measured exercise data from the selected exercise device.

According to an embodiment, upon detection of an input to select the virtual exercise device among the at least one exercise device, the processor 350 may obtain at least one piece of exercise data configured for the virtual exercise device.

According to an embodiment, upon detection of an input to select an exercise device having a communication connection with the server among the at least one exercise device, the processor 350 may receive, via the server 230, at least one piece of exercise data measured by the exercise device having a communication connection with the server 230, and may obtain the same.

The disclosure is not limited thereto, and at least one piece of exercise data may be stored, in advance, in a memory (e.g., memory 320 of FIG. 3) of the electronic device 210 or the server 230. Upon detection of an input to obtain at least one piece of exercise data stored in the memory 320 of the electronic device 210 or the server 230, the processor 350 may obtain at least one piece of exercise data from the memory 320 of the electronic device 210 or the server 230. According to an embodiment, the at least one piece of exercise data stored in advance in the memory 320 of the electronic device 210 or the server 230 may include exercise data measured once or exercise data measured more than once and accumulated.

According to an embodiment, the processor 350 may perform debugging of the written logic by using the at least one piece of obtained exercise data in operation 550, and may generate an exercise-related content based on the logic and may store the generated exercise-related content in operation 560.

According to an embodiment, the processor 350 may proceed with operation 560 based on a debugging result. For example, when the debugging result shows that no error occurs, the processor 350 may generate an exercise-related content based on the logic. Although not illustrated, when the debugging result shows that an error occurs, the processor 350 may identify logic with an error, may correct the logic with the error, and may perform operation 550 again.

According to an embodiment, the processor 350 may store the generated exercise-related content in the memory 320. The disclosure is not limited thereto, and the processor 350 may upload the generated exercise-related content to the server 230, and may store the generated exercise-related content to the server 230.

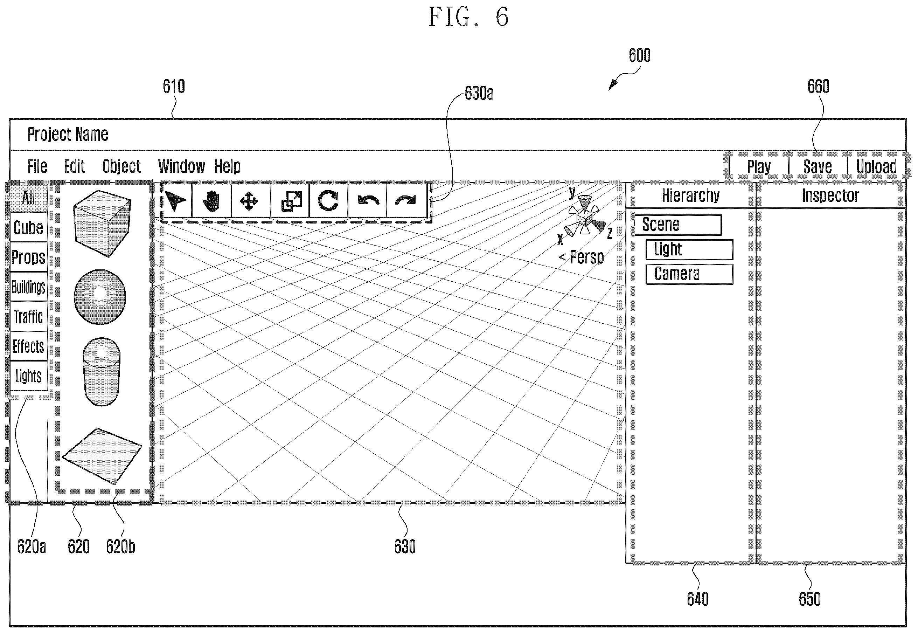

FIG. 6 is a diagram 600 illustrating a user interface for generating a virtual space according to an embodiment of the disclosure.

Referring to FIG. 6, a processor (e.g., processor 350 of FIG. 3) of an electronic device (e.g., electronic device 210 of FIG. 2) may display a user interface for generating a virtual space on a display (e.g., display 330 of FIG. 3).

According to an embodiment, the user interface for generating a virtual space may include an area 620 for displaying at least one object, a virtual space area 630, an area 640 for displaying a list of at least one object, an area 650 for configuring a property of at least one object, and/or a menu 660 related to generating an exercise-related content.

According to an embodiment, in the area 620 that displays at least one object, a category 620a and/or at least one object 620b may be displayed.

According to an embodiment, the category 620a may include "All," "Cube," "Props," "Buildings," "Traffic," "Effects," and/or "Lights." However, the disclosure is not limited thereto.

According to an embodiment, the at least one object 620b may include a 2D object and/or 3D object. According to an embodiment, the at least one object 620b may be classified based on the category 620a.

According to an embodiment, at least one object 620b may be disposed in the virtual space area 630. For example, the at least one object 620b may be disposed in the virtual space area 630, and may be selected, operated, and/or corrected by a user.

According to an embodiment, in at least part of the virtual space area 630, items 630a for editing at least one object may be displayed. For example, the items 630a for editing at least one object may include an item for selecting at least one object, an item for moving a view of the virtual space area 630, an item for moving at least one object, an item for adjusting a scale of at least one object, an item for rotating at least one object, a redo item, and/or an undo item.

According to an embodiment, the area 640 for displaying a list of at least one object may display a list of at least one object disposed in the virtual space area 630. For example, a hierarchical structure (e.g., parent-child structure) of the objects disposed in the virtual space area 630 may be displayed and/or edited via the list of the at least one object displayed in the area 640 for displaying a list of at least one object.

According to an embodiment, the area 650 for configuring a property of at least one object may display property information of an object selected among at least one object disposed in the virtual space area 630. The area 650 for configuring a property of at least one object may change property information of an object selected among at least one object disposed in the virtual space area 630. The property information of an object may include a position (e.g., coordinates) of the object, a rotation of the object, and/or a scale of the object.

According to an embodiment, the menu 660 related to generating of an exercise-related content may include a menu for executing (playing) an exercise-related content generated based on logic written based on at least one object disposed in the virtual space area 630 and property information of at least one object, a menu for saving a generated exercise-related content, and/or a menu for uploading a generated exercise-related content to a server (e.g., server 230 of FIG. 2). However, the disclosure is not limited thereto.

At least some of the components (e.g., areas, menu, objects, and/or items) of the user interface for generating a virtual space illustrated in FIG. 6 according to various embodiments may be omitted. **In** addition, at least some of the components of the user interface for generating a virtual space may be hidden based on a user input, and may not be displayed on the display 330. At least some components in a hidden state may be switched to a display state based on a user input, and at least some components may be displayed on the display 330 based on switching to the display state.

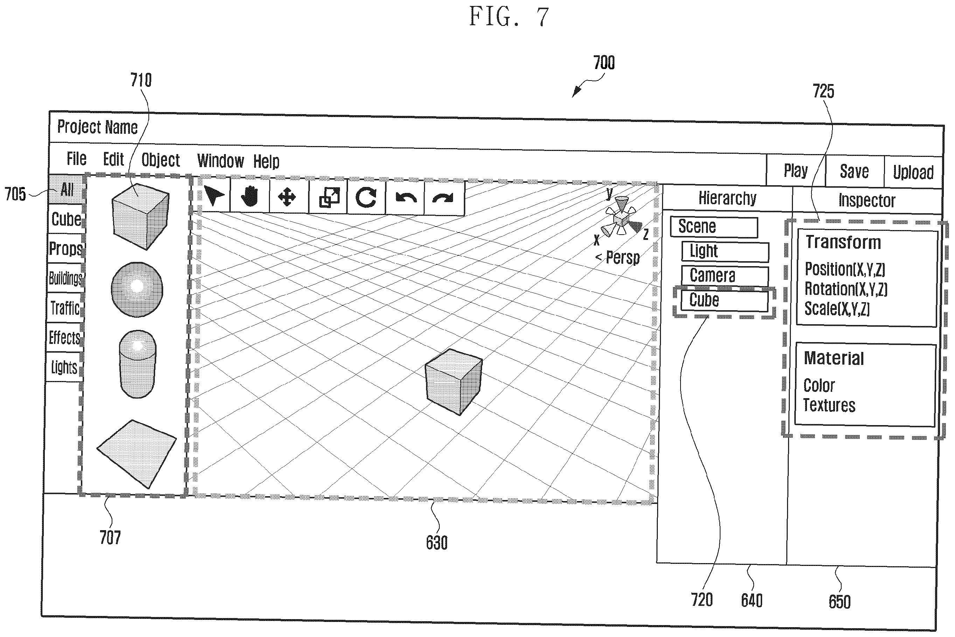

FIG. 7 is a diagram 700 illustrating a method of generating a virtual space according to an embodiment of the disclosure.

Referring to FIG. 7, a processor (e.g., processor 350 of FIG. 3) of an electronic device (e.g., electronic device 210 of FIG. 2) may display a user interface for generating a virtual space on a display (e.g., display 330 of FIG. 3).

According to an embodiment, the processor 350 may detect an input to select a category (e.g., category 620a of FIG. 6) and one of the at least one object (e.g., at least one object 620b of FIG. 6) included in the category 620a in an area (e.g., area 620 for displaying at least one object of FIG. 6) for displaying at least one object displayed in the user interface for generating a virtual space. For example, based on detection of an input to select "All" 705 in the category 620a, the processor 350 may display objects 707 corresponding to the category "All" 705. Upon detection of an input to select an object 710 among the objects 707 corresponding to the category "All" 705, the processor 350 may dispose the selected object 710 in the virtual space area 630. The disclosure is not limited thereto, and based on an input that selects the object 710 among the objects 707 corresponding to the category "All" 705 and drags the same into the virtual space area 630, the selected object 710 may be disposed in the virtual space area 630.

According to an embodiment, when the selected object 710 is disposed in the virtual space area 630, the processor 350 may display information 720 (e.g., cube) indicating the object 710 in an area for displaying a list of at least one object (e.g., area 640 for displaying a list of at least one object of FIG. 6).

According to an embodiment, upon detection of an input to select the object 710 disposed in the virtual space area 630, the processor 350 may display property information 725 of the selected object 710 in an area for configuring a property of at least one object (e.g., area 650 for configuring a property of at least one object of FIG. 6). For example, the property information 725 of the selected object 710 may include position information (e.g., coordinate information), rotation information, scale information, and/or material information (e.g., color, textures) of the object 710. The processor 350 may change the property information 725 of the selected object 710 via the area for configuring a property of at least one object (e.g., area 650 for configuring a property of at least one object of FIG. 6).

In FIG. 7 according to various embodiments, although it has been described that the object 710, selected based on an input to select the object 710 among the objects 707, is disposed in the virtual space area 630, the disclosure is not limited thereto. For example, the processor 350 may dispose, in the virtual space area 630, a 3D model file loaded based on an input to load a 3D model file that is not included in the objects 707 or a 3D model file constituting the produced virtual space area 630.

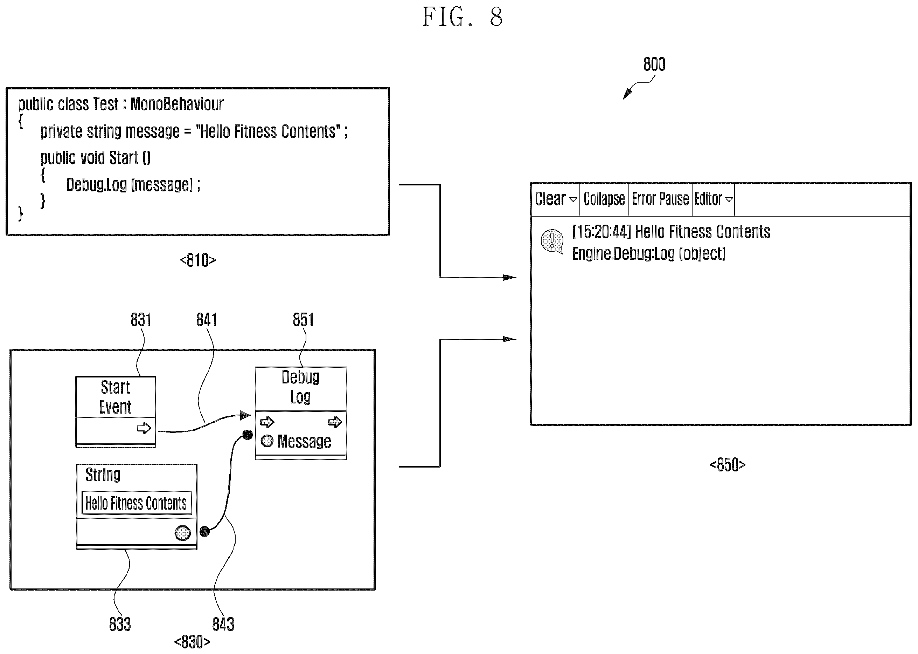

FIG. 8 is a diagram 800 illustrating a method of writing logic of an exercise-related content according to an embodiment of the disclosure.

Referring to FIG. 8, a processor (e.g., processor 350 of FIG. 3) of an electronic device (e.g., electronic device 210 of FIG. 2) may write logic of an exercise-related content to be performed using at least one object disposed in a virtual space. For example, the processor 350 may write logic of an exercise-related content via at least one of a script scheme or a block coding scheme. However, the disclosure is not limited thereto.

Reference numeral 810 according to an embodiment illustrates a method of writing logic of an exercise-related content by using a script scheme. Reference numeral 830 illustrates a method of writing logic of an exercise-related content by using a block coding scheme. Reference numeral 850 illustrates a screen output when logic written according to reference numerals 810 and 830 is executed.

According to an embodiment, as illustrated in reference numeral 810, when logic is written using the script scheme in order to output a message, "Hello Fitness Contents," the processor 350 may output the message, "Hello Fitness Contents," as illustrated in reference numeral 850.

According to an embodiment, as illustrated in reference numeral 830, when logic is written using the block coding scheme in order to output a message, "Hello Fitness Contents," the processor 350 may output the message, "Hello Fitness Contents," as illustrated in reference numeral 850. For example, when the block coding scheme is used, the processor 350 may write logic based on an input to connect a first block 831, a second block 833, and a third block 835. For example, the first block 831 may be a block that calls the start of an application. The second block 833 may be a block including a message, "Hello Fitness Contents." The third block 835 may be a block associated with a Debug.Log function that outputs a message. According to an embodiment, the processor 350 may write logic based on an input for connection 841 of an output of a function "Start" of the first block 831 and an input of a function "Debug" of the third block 835, and an input for connection 843 of an output of a function "string" of the second block 833 and an input of "Debug" of the third block 835.

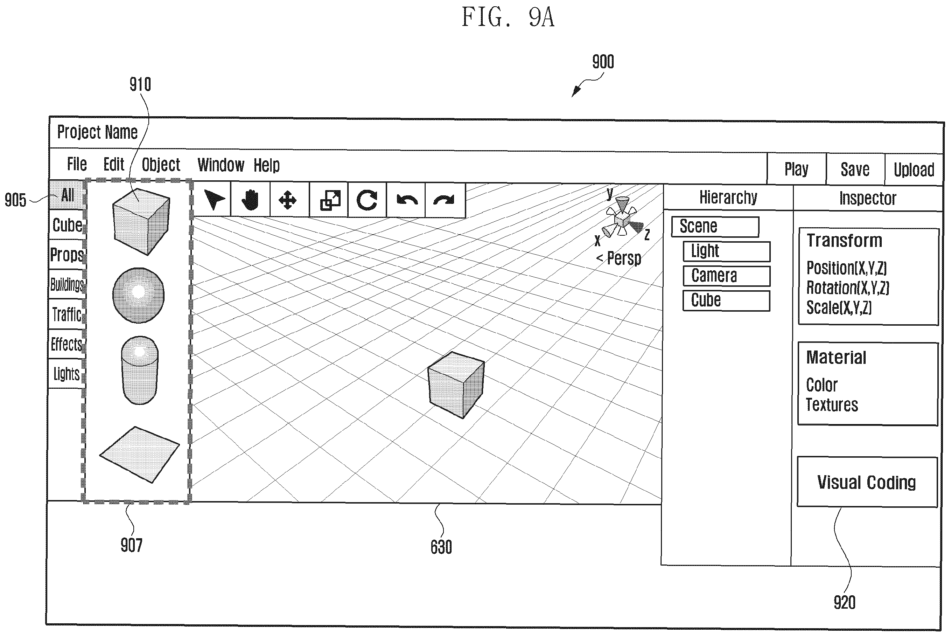

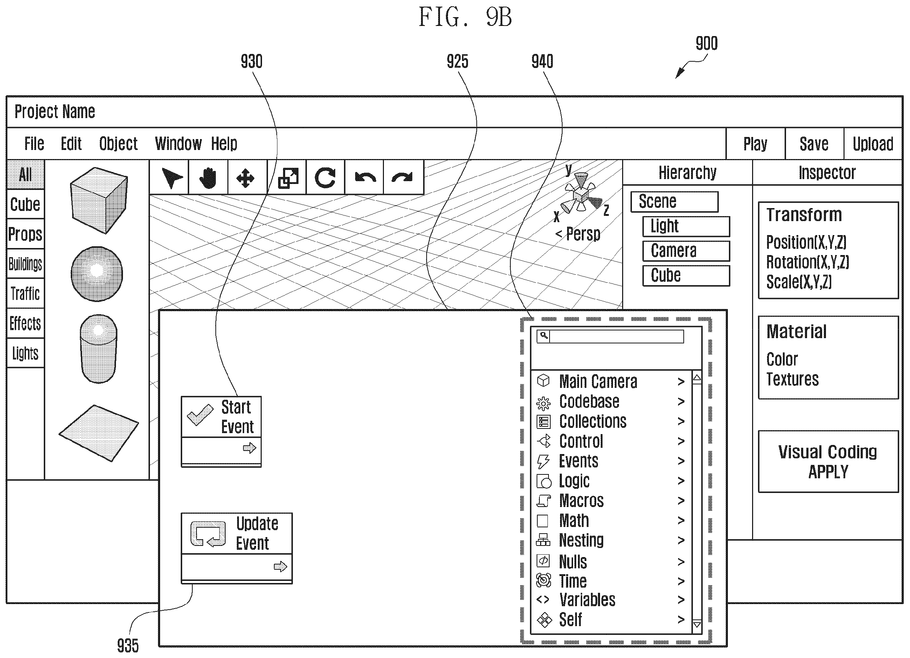

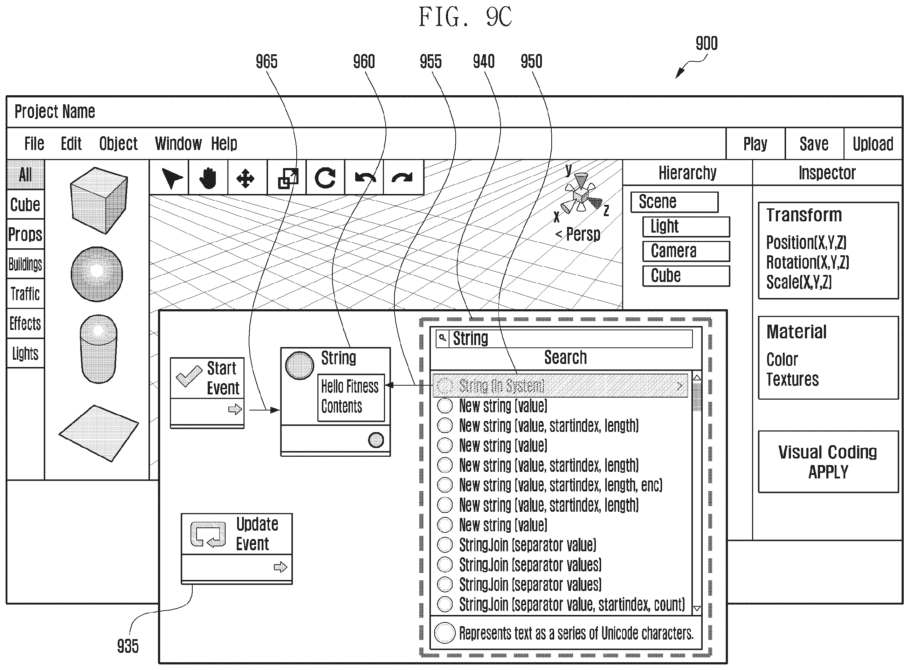

FIGS. 9A, 9B, and 9C are diagrams 900 illustrating a method of writing logic of an exercise-related content according to an embodiment of the disclosure.

Referring to FIG. 9A, a processor (e.g., processor 350 of FIG. 3) of an electronic device (e.g., electronic device 210 of FIG. 2) may display a display (e.g., display 330 of FIG. 3) in a user interface for generating a virtual space.

According to an embodiment, the processor 350 may detect an input to select a category (e.g., category 620a of FIG. 6) and one of the at least one object (e.g., at least one object 620b of FIG. 6) included in the category 620a in an area (e.g., area 620 for displaying at least one object of FIG. 6) for displaying at least one object displayed in the user interface for generating a virtual space. For example, based on detection of an input to select "All" 905 in the category 620a, the processor 350 may display objects 907 corresponding to the category "All" 905. Upon detection of an input to select an object 910 among the objects 907 corresponding to the category "All" 905, the processor 350 may dispose the selected object 910 in the virtual space area 630.

According to an embodiment, upon detection of an input to select the object 910 disposed in the virtual space area 630, the processor 350 may display property information (e.g., property information 725 of FIG. 7) of the selected object 910 in an area for configuring a property of at least one object (e.g., area 650 for configuring a property of at least one object of FIG. 6), and/or an item 920 (e.g., visual coding) for writing logic according to the block coding scheme.

According to an embodiment, upon detection of an input to select the item 920 (e.g., visual coding) for writing logic by using the block coding scheme, the processor 350 may write logic of an exercise-related content according to the block coding scheme.

For example, referring to FIG. 9B, based on detection of an input to select the item 920 (e.g., visual coding) for writing logic by using the block coding scheme, the processor 350 may display a screen 925 for writing logic of an exercise-related content according to the block coding scheme. For example, the screen 925 for writing logic of an exercise-related content may include a first block 930 and a second block 935. For example, the first block 930 may be a block (e.g., a block associated with a function "Start") that is called when an exercise-related content is executed. The second block 935 may be a block (e.g., a block associated with a function "Update") for updating in predetermined cycles.

According to an embodiment, based on detection of an input to generate a block, the processor 350 may display a generatable object selection window 940 on the screen 925 for writing logic. When a predetermined function is selected via the generatable object selection window 940, the processor 350 may display a block for the selected function on the screen 925 for writing logic.

For example, referring to FIG. 9C, based on detection of an input 955 to select and drag a function "String" 950 (or an input to select the function "String" 950) from the generatable object selection window 940, the processor 350 may display a third block 960 for the function "String" on the screen 925 for writing logic. After displaying the third block 960, the processor 350 may write logic based on an input for connection 965 of the function "Start" of the first block 930 and the function "String" of the third block 960.

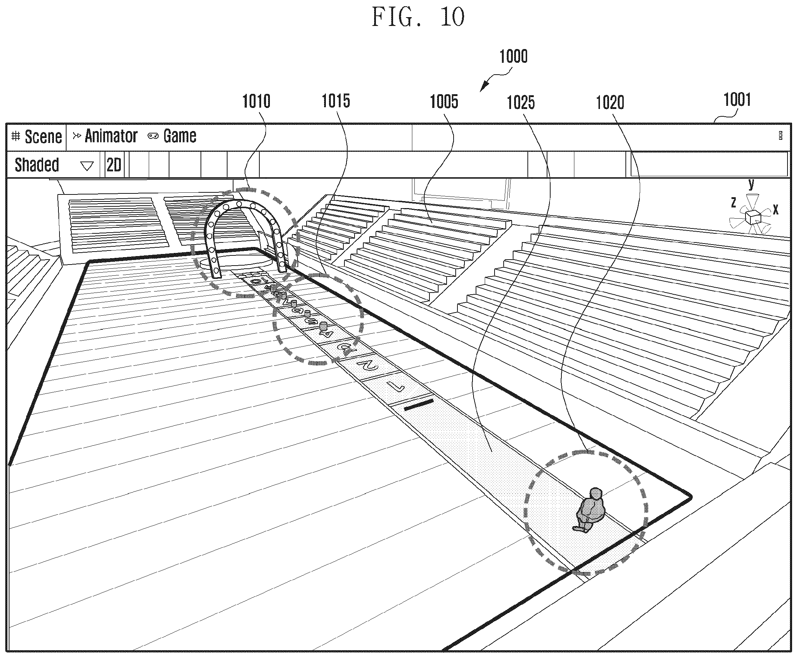

FIG. 10 is a diagram 1000 illustrating a generated virtual space according to an embodiment of the disclosure.

Referring to FIG. 10, based on an input to dispose an object in the virtual space area as illustrated in FIGS. 9A, 9B, and 9C, a processor (e.g., processor 350 of FIG. 3) of the electronic device 210 may generate a virtual space 1001 related to an exercise. In addition, based on detection of an input to select the item 920 (e.g., visual coding) for writing logic according to a block coding scheme, the processor 350 may write logic of at least one exercise-related content to be performed using at least one object disposed in the virtual space 1001.

For example, the virtual space 1001 may include a character 1020, a movement path 1025 of the character 1020, a destination point 1010 of the character 1020, at least one object 1015 (e.g., coin) that may be obtained based on the movement of the character 1020 to the destination point 1010 along the movement path 1025, and/or a concept 1005 (e.g., stadium concept) of the virtual space 1001.

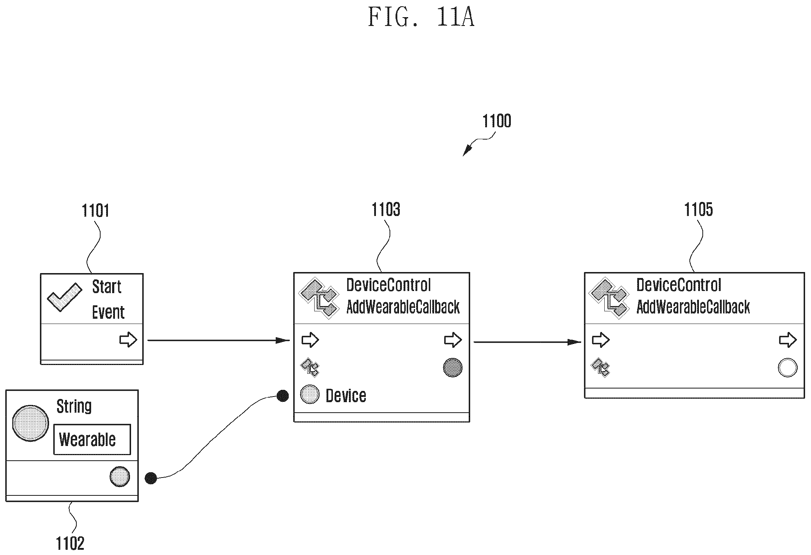

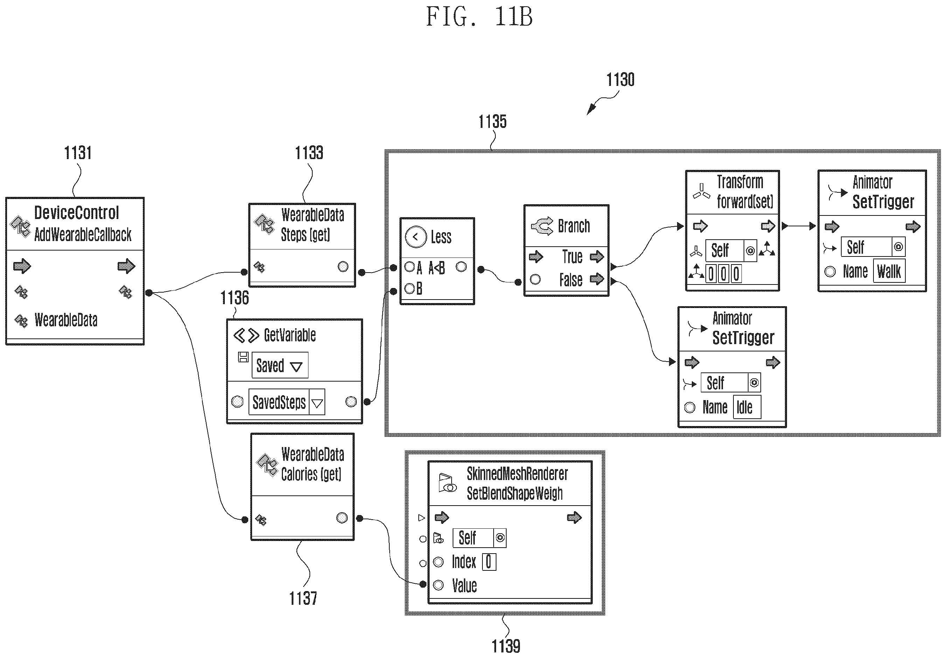

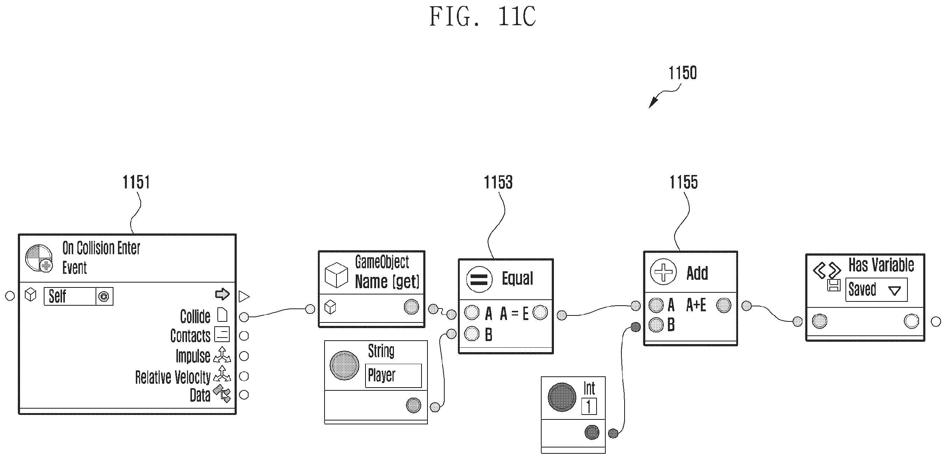

FIGS. 11A, 11B, and 11C are diagrams 1100, 1130, and 1150 illustrating a method of writing logic of an exercise-related content according to an embodiment of the disclosure.

FIG. 11A according to an embodiment is a diagram illustrating a method of writing, according to a block coding scheme, logic that connects an electronic device (e.g., electronic device 210 of FIG. 2) and an exercise device (e.g., external electronic device 220 of FIG. 2), and logic that registers a data callback when the exercise device is normally connected to the electronic device 210.

Referring to FIG. 11A, a processor (e.g., processor 350 of FIG. 3) of the electronic device 210 may display, on a display (e.g., display 330 of FIG. 3), a screen for writing logic of an exercise-related content via the block coding scheme. For example, upon detection of an input to select the item 920 for writing logic according to the block coding scheme after selection of an object disposed in the virtual space area, as illustrated with reference to FIG. 9A, the processor 350 may display, on the display 330, a screen for writing logic of an exercise-related content according to the block coding scheme.

According to an embodiment, the screen for wiring logic of an exercise-related content may include a first block 1101, a second block 1102, a third block 1103, and a fourth block 1105. For example, the first block 1101 may be a block that processes logic that calls the start of an application. The second block 1102 may be a block including a message, "Wearable." The third block 1103 may be a block that processes logic that attempts to connect to an exercise device, for example, a wearable electronic device. The fourth block 1105 may be a block to process logic that registers a data callback when a wearable electronic device is normally connected.

According to the block coding scheme illustrated in FIG. 11A according to various embodiments, the processor 350 may attempt to connect to a wearable electronic device when an application is executed, and may write logic that adds the connected wearable electronic device via a data callback when the wearable electronic device is normally connected.

FIG. 11B according to an embodiment is a diagram illustrating a method of writing logic that applies a motion of a character (e.g., character 1020 of FIG. 10) based on exercise data according to a block coding scheme.

Referring to FIG. 11B, the processor 350 may display, on the display 330, a screen for writing logic that applies a motion of the character 1020 based on exercise data. A screen for writing logic that applies a motion of the character 1020 based on exercise data may include a fifth block 1131, a sixth block 1133, a seventh block 1135, an eighth block 1136, a ninth block 1137, and a tenth block 1139. For example, the fifth block 1131 may be a block to process logic that calls a callback of exercise data updating when exercise data is updated. The sixth block 1133 may be a block to process logic that uses exercise data, for example, step data (e.g., step value), among callback data. The seventh block 1135 may be a block to process a movement of the character 1020 and an animation logic based on the movement of the character 1020, and may include a plurality of sub-blocks to process the movement of the character 1020 and the animation logic based on the movement of the character 1020. An eighth block 1136 may be a block to process logic that stores step data. The ninth block 1137 may be a block to process logic that obtains exercise data (e.g., calories) among callback data. The tenth block 1139 may be a block to process logic that changes a body shape of the character 1020 by using obtained exercise data, for example, calories.

By using the block coding scheme illustrated in FIG. 11B according to various embodiments, the processor 350 may obtain exercise data, for example, step data and calories, via a wearable electronic device, may display, based the step data, an animation representing the character 1020 moving, and may write logic that changes the body shape of the character 1020 using the calories.

FIG. 11C according to an embodiment is a diagram illustrating a method of writing logic that obtains a score when the character 1020 and an object (e.g., at least one object 1015 of FIG. 10) collide, according to a block coding scheme.

Referring to FIG. 11C, the processor 350 may display, on the display 330, a screen for writing logic that obtains a score when the character 1020 and the object 1015 collide. The screen for wiring logic that obtains a score when the character 1020 and the object 1015 collide may include an eleventh block 1151, a twelfth block 1153, and a thirteenth block 1155. For example, the eleventh block 1151 may be a block to process logic that identifies whether an event in which the character 1020 and the object 1015 collide occurs. The twelfth block 1153 may be a block to process logic that identifies whether a name of the object 1015 that collides with the character 1020 is "player." The thirteenth block 1155 may be a block to process logic that obtains a score of 1, and accumulates and store score data when the name of the object 1015 that collides with the character 1020 is "player."

By using the block coding scheme illustrated in FIG. 11C according to various embodiments, the processor 350, when an event in which the character 1020 and the object 1015 collide occurs, may identify whether the name of the object 1015 is a name of the predetermined object 1015, and may write logic that obtains a score of 1 and accumulate and store the score data when the name of the object 1015 is the name of the predetermined object 1015.

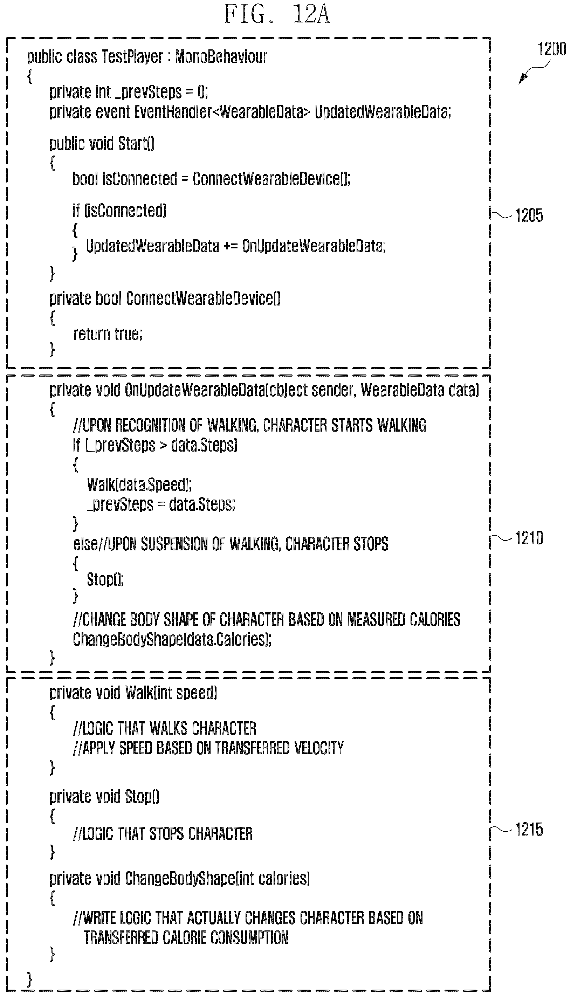

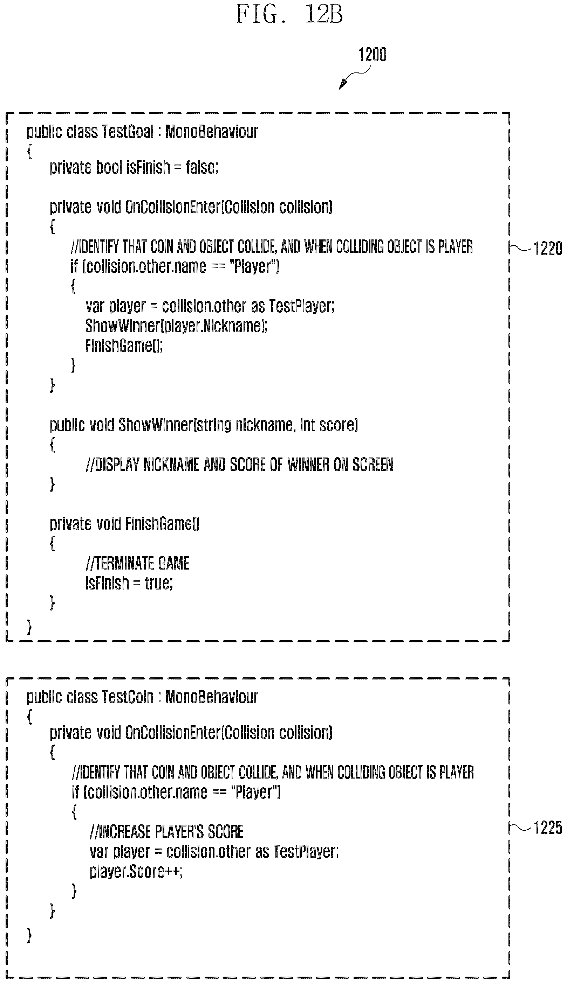

FIGS. 12A and 12B are diagrams 1200 illustrating a method of writing logic of an exercise-related content according to an embodiment of the disclosure.

FIG. 12A and FIG. 12B according to an embodiment are diagrams illustrating a method of writing logic of an exercise-related content via a script scheme.

Referring to FIG. 12A, FIG. 12A is a script scheme corresponding to the block coding scheme illustrated in FIGS. 11A and 11B. For example, reference numeral 1205 is a script associated with logic that connects an electronic device (e.g., electronic device 210 of FIG. 2) and an exercise device (external electronic device 220 of FIG. 2) and logic that registers a data callback when the exercise device is normally connected to the electronic device 210. Reference numerals 1210 and 1215 may be scripts associated with logic that applies a motion of a character (e.g., character 1020 of FIG. 10) based on exercise data (e.g., step data and calories) and logic that changes a body shape of the character 1020.

Referring to FIG. 12B, FIG. 12B is a script scheme corresponding to the block coding scheme illustrated in FIG. 11C. For example, reference numeral 1220 may be a script associated with logic that processes an operation (e.g., termination of a game) that may be performed when the character 1020 arrives at a destination point (e.g., destination point 1010 of FIG. 10). Reference numeral 1225 may be a script associated with logic that, when an event in which the character 1020 and an object (e.g., at least one object 1015 of FIG. 10) collide occurs, identifies a name of the object 1015 and accumulates and stores score data.

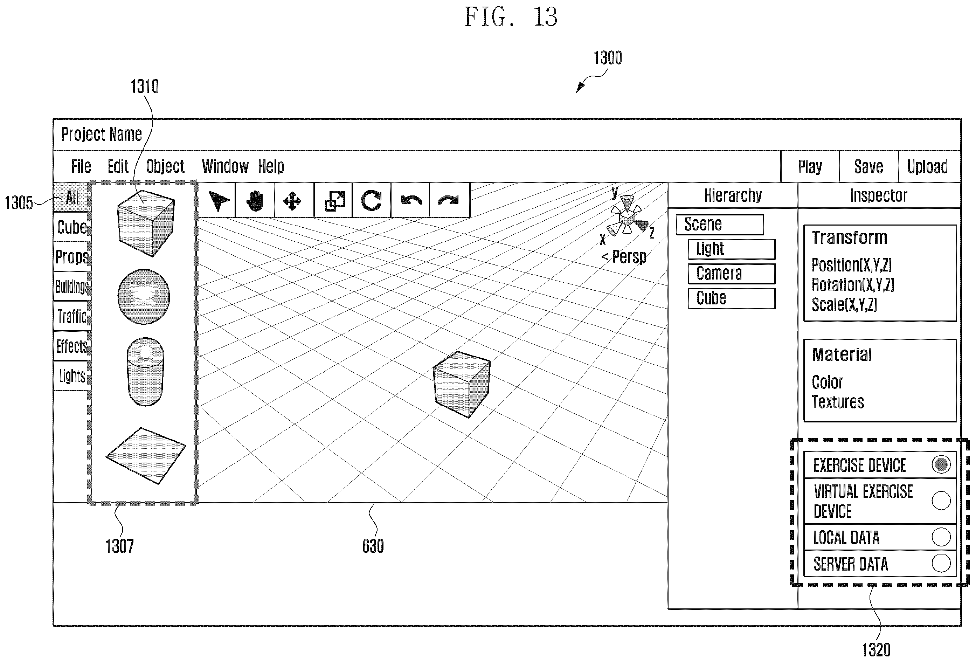

FIG. 13 is a diagram 1300 illustrating a method of obtaining exercise data according to an embodiment of the disclosure.

Referring to FIG. 13, a processor (e.g., processor 350 of FIG. 3) of an electronic device (e.g., electronic device 210 of FIG. 2) may display a user interface for generating a virtual space on a display (e.g., display 330 of FIG. 3).

According to an embodiment, the processor 350 may detect an input to select a category (e.g., category 620a of FIG. 6) and one from the at least one object (e.g., at least one object 620b of FIG. 6) included in the category 620a in an area (e.g., area 620 for displaying at least one object of FIG. 6) for displaying at least one object included in the user interface for generating a virtual space. For example, based on detection of an input to select "All" 1305 in the category 620a, the processor 350 may display objects 1307 corresponding to the category "All" 1305. Upon detection of an input to select an object 1310 among the objects 1307 corresponding to the category "All" 1305, the processor 350 may dispose the selected object 1310 in the virtual space area 630.

According to an embodiment, upon detection of an input to select the object 1310 disposed in the virtual space area 630, the processor 350 may display, on the display 330, property information (e.g., property information 725 of FIG. 7) of the selected object 910 in an area for configuring a property of at least one object (e.g., area 650 for configuring a property of at least one object of FIG. 6), and/or a list 1320 for obtaining exercise data.

According to an embodiment, the list 1320 for obtaining exercise data may include at least one device (e.g., exercise device, virtual exercise device) capable of obtaining exercise data and/or exercise data (e.g., local data, server data) stored in at least one storage. Upon detection of an input to select one from the list 1320 for obtaining exercise data, the processor 350 may display, on the display 330, a user interface related to exercise data of the selected device (or user interface related to exercise data stored in selected storage).

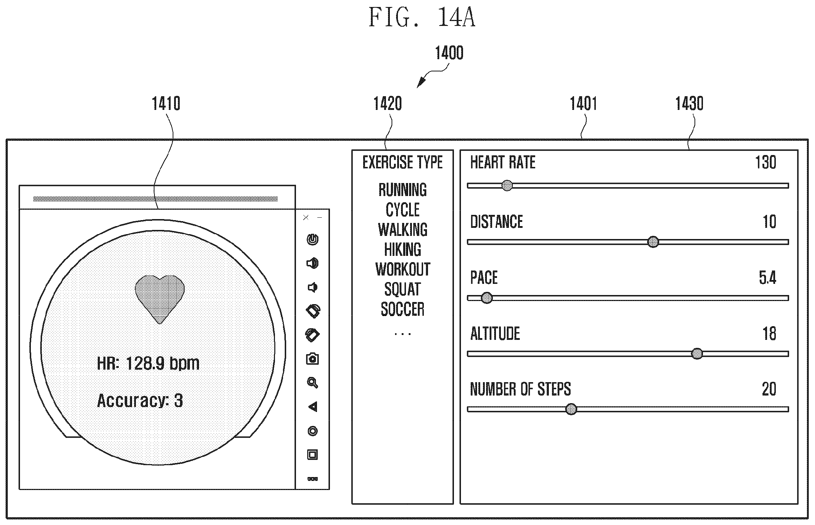

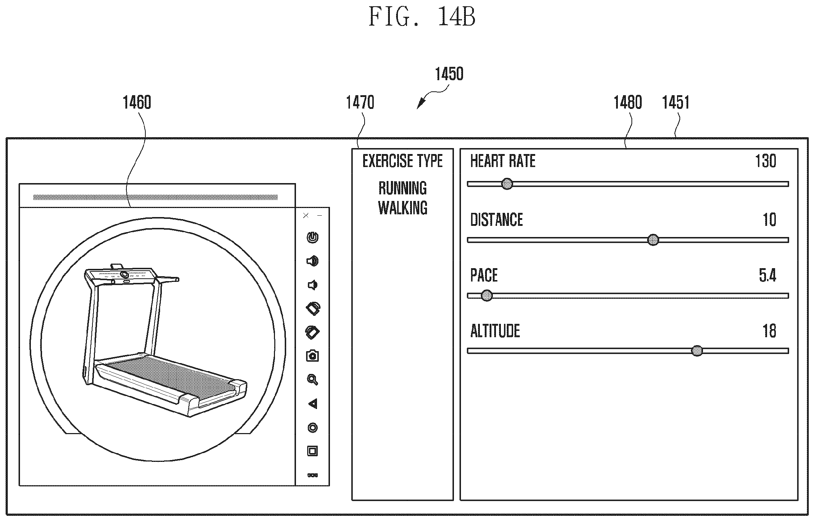

In this connection, various embodiments will be described with reference to FIG. 14A and FIG. 14 B below.

FIGS. 14A and 14B are diagrams 1400 and 1450 illustrating methods of obtaining exercise data according to an embodiment of the disclosure.

Referring to FIG. 14A and FIG. 14B, upon detection of an input to select a device from a list for obtaining exercise data (e.g., list 1320 for obtaining exercise data of FIG. 13) after selection of an object (e.g., object 1310 of FIG. 13) disposed in a virtual space area (e.g., virtual space area 630 of FIG. 6), a processor (e.g., processor 350 of FIG. 3) of an electronic device (e.g., electronic device 210 of FIG. 2) may display, on a display (e.g., display 330 of FIG. 3), a user interface 1401 or 1451 related to exercise data of the selected device (or user interface related to exercise data stored in a selected storage).

For example, the user interface 1401 related to exercise data of the selected device as illustrated in FIG. 14A (or a user interface related to exercise data stored in a selected storage) may include information 1410 associated with predetermined exercise data, an exercise type 1420 (e.g., running, bicycle, walking, hiking, workout, squat, and/or soccer), or a value 1430 of exercise data (e.g., heart rate, distance, pace, altitude, and/or the number of steps) measured via an exercise device.

As another example, the user interface 1451 related to exercise data of the selected device as illustrated in FIG. 14B (or a user interface related to exercise data stored in a selected storage) may include information 1460 associated with an exercise device, an exercise type 1470 (e.g., running and/or walking), or a value 1480 of exercise data (e.g., heart rate, distance, pace, and/or altitude) measured via an exercise device.

A value 1430 or 1480 of exercise data (e.g., heart rate, distance, pace, and/or altitude) according to an embodiment may be a value actually measured by an exercise device. The disclosure is not limited thereto, and the value 1430 or 1480 of exercise data (e.g., heart rate, distance, pace, and/or altitude) may be adjusted by a user, or may be adjusted by the processor 350 according to a predetermined condition.

Although it is described that the user interface 1401 or 1451 related to exercise data of the selected device as illustrated in FIG. 14A and FIG. 14B is displayed on the display 330 of the electronic device 210, the disclosure is not limited thereto. For example, the user interface 1401 or 1451 related to exercise data of the selected device may be displayed on a display device (not illustrated) having a communication connection with the electronic device 210 via a communication circuit (e.g., communication circuit 310 of FIG. 3) and/or a display (e.g., display 435 of FIG. 4) of an external electronic device (e.g., external electronic device 220 of FIG. 2 and FIG. 4).

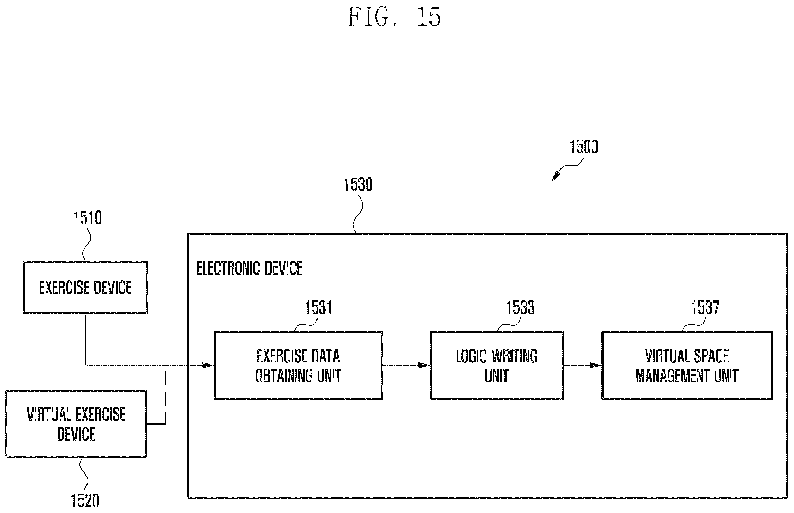

FIG. 15 is a diagram 1500 illustrating a method of producing an exercise-related content according to an embodiment of the disclosure.

Referring to FIG. 15, an electronic device 1530 (e.g., electronic device 210 of FIG. 2 and FIG. 3) may include an exercise data obtaining unit1531, a logic writing unit 1532, and/or a virtual space management unit 1537. For example, the exercise data obtaining unit 1531, the logic writing unit 1532, and/or the virtual space management unit 1537 may be included in a processor (e.g., processor 350 of FIG. 3). For example, the exercise data obtaining unit 1531, the logic writing unit 1532, and/or the virtual space management unit 1537 may be included in the electronic device 210 as a hardware module (e.g., circuitry), and/or may be embodied as software including one or more instructions executable by the electronic device 210.

According to an embodiment, the electronic device 1530 may be a device for generating (e.g., producing) an exercise-related content.

According to an embodiment, the exercise data obtaining unit 1531 may obtain exercise data via an exercise device 1510 (e.g., external electronic device 220 of FIG. 2) and/or a virtual exercise device 1520.

According to an embodiment, the exercise device 1510 may be an actually existing exercise device, and may include, for example, an exercise machine (e.g., treadmill, cycle), a wearable electronic device (e.g., smart watch), a camera device (e.g., a camera device for capturing an image of a user doing an exercise), and a VR device. However, the disclosure is not limited thereto.

According to an embodiment, the exercise device 1510 may perform an exercise by a user, measure exercise data in real time, and provide the measured exercise data to the electronic device 1530.

According to an embodiment, the virtual exercise device 1520 refers to an exercise device provided as a virtual system. For example, although an exercise device does not actually exist, a value of exercise data (e.g., a value 1430 or 1480 of exercise data of FIG. 14A and FIG. 14B) of the virtual exercise device 1520 may be configurable. For example, the value of the exercise data of the virtual exercise device 1520 (e.g., the value 1430 or 1480 of the exercise data of FIG. 14A and FIG. 14B) may be configured by a user or may be configured by the processor 350 according to a predetermined condition. The virtual exercise device 1520 may provide the configured exercise data of the virtual exercise device 1520 to the electronic device 1530. The virtual exercise device 1520 may facilitate a user of the electronic device 210 that is not equipped with an actual exercise device to produce an exercise-related content by using exercise data.

According to an embodiment, the logic writing unit 1532 may write logic of an exercise-related content. For example, the logic writing unit 1532 may write logic of an exercise-related content via at least one of a script scheme or a block coding scheme.

According to an embodiment, the virtual space management unit 1537 may manage at least one object disposed in a virtual space. The virtual space management unit 1537 may apply obtained exercise data to at least one object via logic written using the logic writing unit 1532. For example, exercise data measured (or exercise data obtained) by the exercise device 1510 and/or virtual exercise device 1520 may be applied in real time to the logic written by the logic writing unit 1532.

According to an embodiment, as the exercise data measured by the exercise device 1510 and/or virtual exercise device 1520 is applied in real time to the logic written by the logic writing unit 1532, a user of the electronic device 210 may identify logic based on the current exercise state in person, may perform debugging, and may change and/or process the same in real time.

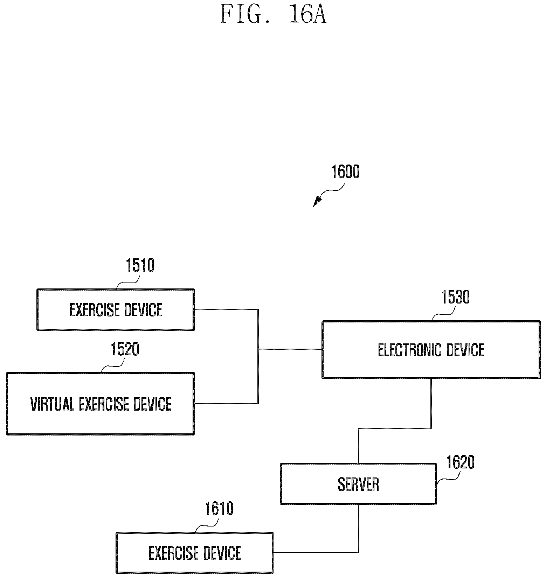

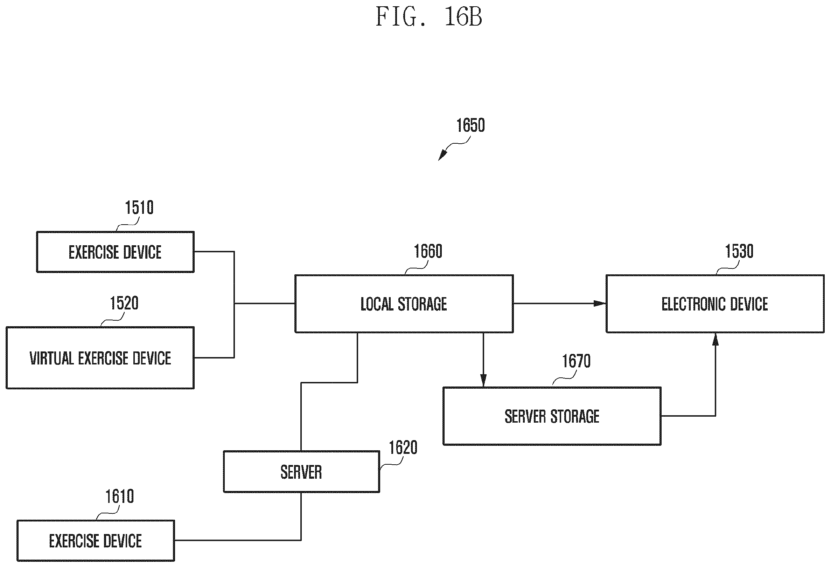

FIGS. 16A and 16B are diagrams 1600 illustrating methods of obtaining exercise data according to an embodiment of the disclosure.

FIG. 16A according to various embodiments is a diagram illustrating an operation performed upon detection of an input to select at least one device (e.g., exercise device and/or virtual exercise device) capable of obtaining exercise data from the list 1320 for obtaining exercise data as described with reference to FIG. 13.

Referring to FIG. 16A, an electronic device 1530 (e.g., electronic device 210 of FIG. 2 and FIG. 3) may receive exercise data from the exercise device 1510 (e.g., external electronic device 220 of FIG. 2) connected for communication and/or from the virtual exercise device 1520. The disclosure is not limited thereto, and the electronic device 1530 may receive exercise data from a server 1620 (e.g., server 230 of FIG. 2) connected remotely. For example, the server 1620 may receive exercise data via an exercise device 1610 having communication connection with the server 1620, and may transmit the exercise data received via the exercise device 1610 to the electronic device 1530.

According to an embodiment, the exercise data may be transmitted to the electronic device 1530 at designated time intervals.

FIG. 16B according to various embodiments is a diagram illustrating an operation performed upon detection of an input to select exercise data (e.g., local data and/or server data) stored in at least one storage from the list 1320 for obtaining exercise data as described with reference to FIG. 13.

Referring to FIG. 16B, measured exercise data may be stored in a local storage 1660 (e.g., memory 320 of FIG. 3) or a server storage 1670.

According to an embodiment, when measured exercise data is stored in the local storage 1660 or the server storage 1670, the electronic device 1530 may generate (or produce) an exercise-related content by using the exercise data stored in the local storage 1660 or the server storage 1670. According to an embodiment, the exercise data stored in the local storage 1660 or the server storage 1670 may not be exercise data measured in real time, but may be exercise data of a predetermined user, measured in advance, and may be exercise data measured once or exercise data measured more than once and accumulated.

According to an embodiment, the local storage 1660 may be included in the electronic device 1530 (e.g., electronic device 210 of FIG. 2 and FIG. 3), and the server storage 1670 may be included in the server 1620 (e.g., server 230 of FIG. 3).

According to an embodiment, the local storage 1660 or the server storage 1670 may store successive values of exercise data. The electronic device 1530 may generate (or produce) an exercise-related content by using the exercise data stored as successive values in the local storage 1660 or the server storage 1670.

According to an embodiment, the exercise data may be provided to the electronic device 1530 in markup languages (e.g., JavaScript object notation (Json) scheme or extensible markup language (XML) scheme). However, the disclosure is not limited thereto.

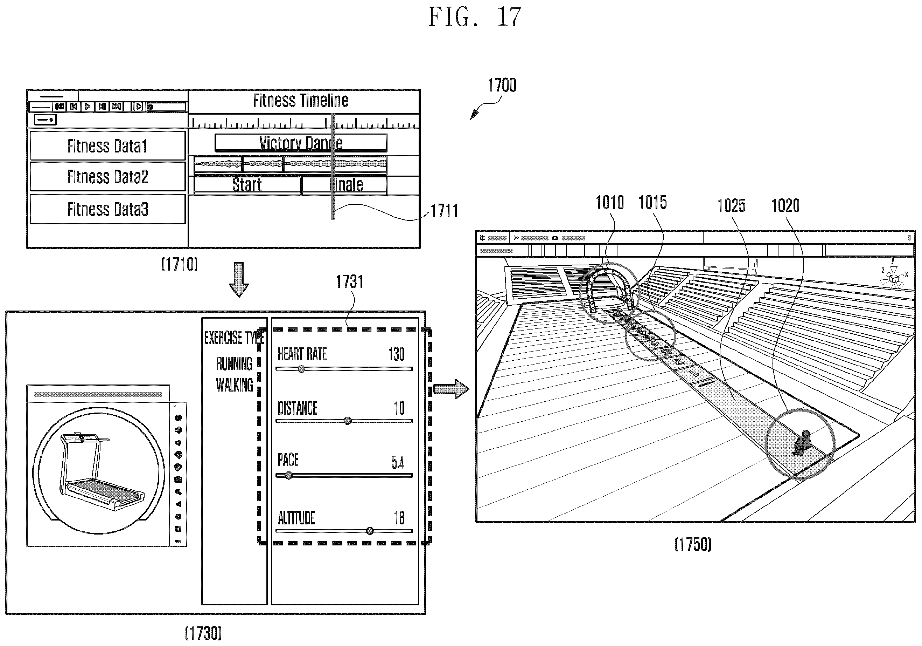

FIG. 17 is a diagram 1700 illustrating a method of producing an exercise-related content according to an embodiment of the disclosure.

Referring to FIG. 17, exercise data may be stored (e.g., stored in the local storage 1660 or server storage 1670 of FIG. 16B) in order of exercise data obtained (or in order of exercise data measured). In this instance, upon detection of an input to select exercise data (e.g., local data, server data) stored in at least one storage from the list 1320 for obtaining exercise data as described with reference to FIG. 13, a processor (e.g., processor 350 of FIG. 3) of an electronic device (e.g., electronic device 210 of FIG. 2 and FIG. 3) may display, on a display (e.g., display 330 of FIG. 3), an interface associated with exercise data in the form of a timeline, as illustrated in reference numeral 1710.

According to an embodiment, the processor 350 may detect an input 1711 to select a predetermined time from the interface associated with exercise data displayed in the form of a timeline. Based on detection of the input 1711 to select a predetermined time, the processor 350 may display, on the display 330, a user interface related to exercise data corresponding to the selected predetermined time, as illustrated in reference numeral 1730. For example, the user interface related to the exercise data may include a value 1731 of exercise data (e.g., heart rate, distance, pace, and/or altitude) associated with an exercise (e.g., running and/or walking) measured at the predetermined time.

According to an embodiment, the processor 350 may apply the exercise data measured at the predetermined time to at least one object constituting a virtual space in real time. For example, as illustrated in reference numeral 1750, based on the exercise data measured at the predetermined time, the processor 350 may identify logic associated with a motion of the character 1020 (e.g., a motion associated with a movement of the character 1020 to the destination point 1010 along the movement path 1025), logic performed when the character 1020 and the object 1015 collide, and/or logic associated with a body shape change or the like of the character 1020 using calories based on a motion of the character 1020.

According to an embodiment, when a result of the above-mentioned identification shows that an error occurs or logic that needs to be corrected exists, the processor 350 may change the logic in real time, and may apply the same to an exercise-related content.

Although, in FIG. 17 according to various embodiments, it is described that an interface associated with exercise data in the form of a timeline and a user interface related to exercise data corresponding to a predetermined time selected from the interface are displayed on the display 330 of the electronic device 210, the disclosure is not limited thereto. For example, the interface associated with exercise data in the form of a timeline and the user interface related to exercise data corresponding to the predetermined time selected from the interface may be displayed on a display device (not illustrated) having a communication connection with the electronic device 210 via a communication circuit (e.g., communication circuit 310 of FIG. 3), and/or a display (e.g., display 435 of FIG. 4) of an external electronic device (e.g., external electronic device 220 of FIG. 2 and FIG. 4).

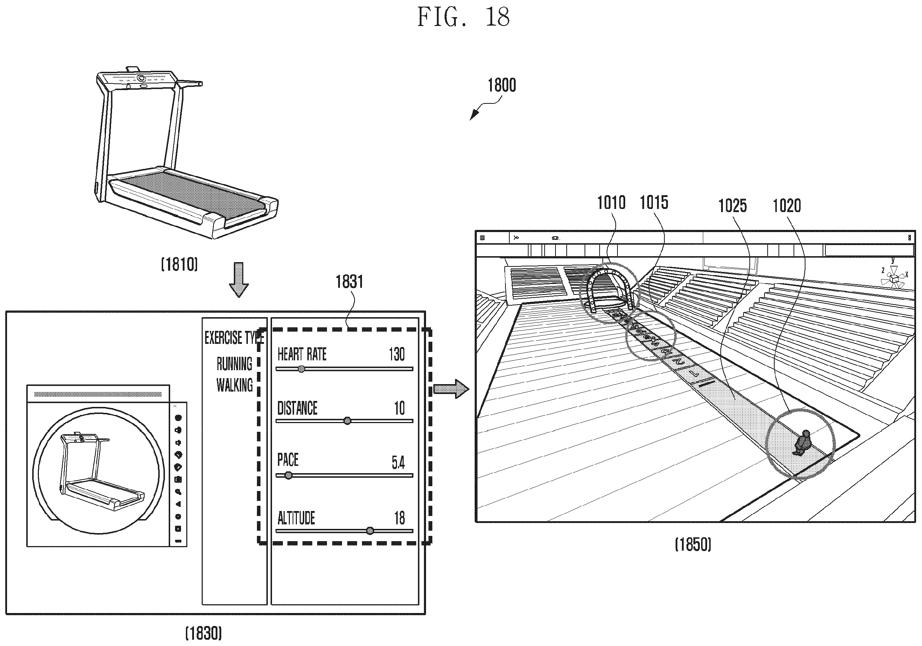

FIG. 18 is a diagram 1800 illustrating a method of producing an exercise-related content according to an embodiment of the disclosure.

Referring to FIG. 18, the electronic device 210 (e.g., electronic device 210 of FIG. 2 and FIG. 3) may be connected to an external electronic device (e.g., external electronic device 220 of FIG. 2) for communication via a communication circuit (e.g., communication circuit 310 of FIG. 3). For example, the external electronic device 220 may be an exercise machine.

In FIG. 18 according to various embodiments, a description will be provided on the assumption that the external electronic device 220 is a treadmill illustrated in reference numeral 1810.

According to an embodiment, based on connection to the treadmill for communication, a processor (e.g., processor 350 of FIG. 3) of the electronic device 210 may display, on a display (e.g., display 330 of FIG. 3), a user interface related to exercise data obtained via the treadmill, as illustrated in reference numeral 1830. For example, the user interface related to exercise data may include a value 1831 of exercise data (e.g., heart rate, distance, pace, and/or altitude) associated with the treadmill.

According to an embodiment, the processor 350 may apply the exercise data obtained via the treadmill to at least one object constituting a virtual space in real time. For example, as illustrated in reference numeral 1850, based on the exercise data obtained via the treadmill, the processor 350 may identify logic associated with a motion of the character 1020 (e.g., a motion associated with a movement of the character 1020 to the destination point 1010 along the movement path 1025), logic performed when the character 1020 and the object 1015 collide, and/or logic associated with a body shape change or the like of the character 1020 using calories based on a motion of the character 1020.

According to an embodiment, when a result of the above-mentioned identification shows that an error occurs or logic that needs to be corrected exists, the processor 350 may change the logic in real time, and may apply the same to an exercise-related content.

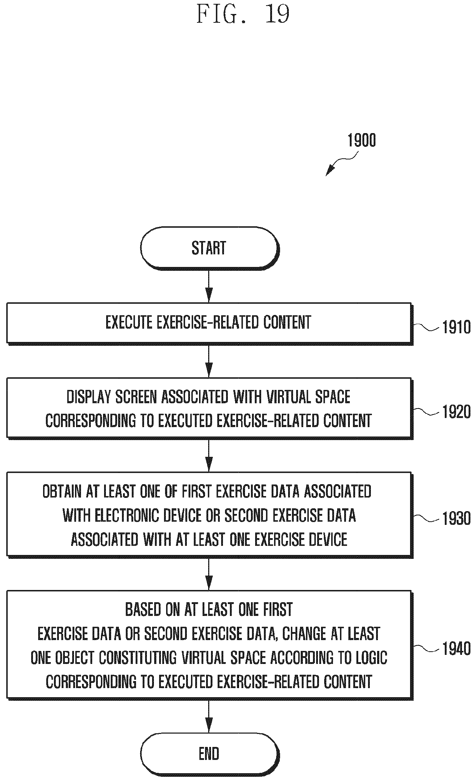

FIG. 19 is a flowchart 1900 illustrating a method of executing an exercise-related content according to an embodiment of the disclosure.

In the embodiment provided hereinafter, operations may be performed sequentially, but the order is not necessarily sequential. For example, the order of operations may be changed, and at least two operations may be performed in parallel.

According to an embodiment, it is understood that operations 1910 to 1940 are performed by a processor (e.g., processor 350 of FIG. 3) of an electronic device (e.g., electronic device 210 of FIGS. 2 and 3).

Referring to FIG. 19, the processor 350 may execute an exercise-related content in operation 1910. For example, the processor 350 may execute an exercise-related content stored in a memory (e.g., memory 320 of FIG. 3), or may download and execute an exercise-related content stored in a server (e.g., server 230 of FIG. 2).

According to an embodiment, when the exercise-related content is executed, the processor 350 may display a guide associated with the exercise-related content on a display (e.g., display 330 of FIG. 3). For example, the guide associated with the exercise-related content may include information associated with logic, for example, motion information of a character, information associated with an operation performed when a character and an object collide, and/or information associated with a change of a character's body shape.

According to an embodiment, in operation 1920, the processor 350 may display, on the display 330, a screen associated with a virtual space corresponding to the executed exercise-related content. For example, the processor 350 may display a screen including a virtual space corresponding to an exercise content described with reference to FIG. 10, for example, the character 1020, the movement path 1025 of the character 1020, the destination point 1010 of the character 1020, the at least one object 1015 (e.g., coin) that may be obtained based on the movement of the character 1020 to the destination point 1010 along the movement path 1025, and/or the concept 1005 (e.g., stadium concept) of the virtual space 1001.

According to an embodiment, in operation 1930, the processor 350 may obtain at least one of first exercise data associated with the electronic device 210 or second exercise data associated with at least one exercise device. For example, the processor 350 may obtain exercise data via a sensor circuit (e.g., sensor circuit 340 of FIG. 3) of the electronic device 210. As another example, the processor 350 may obtain exercise data via at least one exercise device having a communication connection with the electronic device 210 via a communication circuit (e.g., communication circuit 310 of FIG. 3).

According to an embodiment, the at least one exercise device may be an exercise machine such as a treadmill, a cycle, or the like. The disclosure is not limited thereto, and the processor 350 may obtain exercise data associated with an exercise that a user of the electronic device 210 does, via a wearable electronic device (e.g., smart watch), smart glasses, augmented reality (AR) glasses, and/or a camera device (e.g., a camera device for obtaining image data (e.g., video image data associated with a user doing an exercise)).

According to an embodiment, exercise data may include a heart rate, a pace (e.g., velocity), the number of steps, a distance, a cadence, a gradient, an altitude, a calorie, an exercise time, the number of times of exercises performed, a weight, a strength, a maximal oxygen consumption (Vo2Max), an exercise posture type, the accuracy of an exercise posture, and/or a time spent holding an exercise posture. However, the disclosure is not limited thereto.

According to an embodiment, the processor 350 may obtain at least one of the first exercise data associated with the electronic device 210 or the second exercise data associated with at least one exercise device, at designated time intervals.

According to an embodiment, in operation 1940, based on the at least one of the obtained first exercise data or the obtained second exercise data, the processor 350 may change at least one object constituting the virtual space according to logic corresponding to the executed exercise-related content. For example, the processor 350 may apply the at least one of the obtained first exercise data or the obtained second exercise data to at least one object constituting the virtual space. For example, based on the at least one obtained data from the first exercise data and the second exercise data, the processor 350 may move the character 1020 to the destination point 1010 along the movement path 1025, may increase a score when the character 1020 and the object 1015 collide, and/or change a body shape of the character 1020 using calories based on a motion of the character 1020. The disclosure is not limited thereto, and an exercise level/exercise experience, exercise capability, and/or fatigue of the character 1020 may be changed based on the motion of the character 1020.

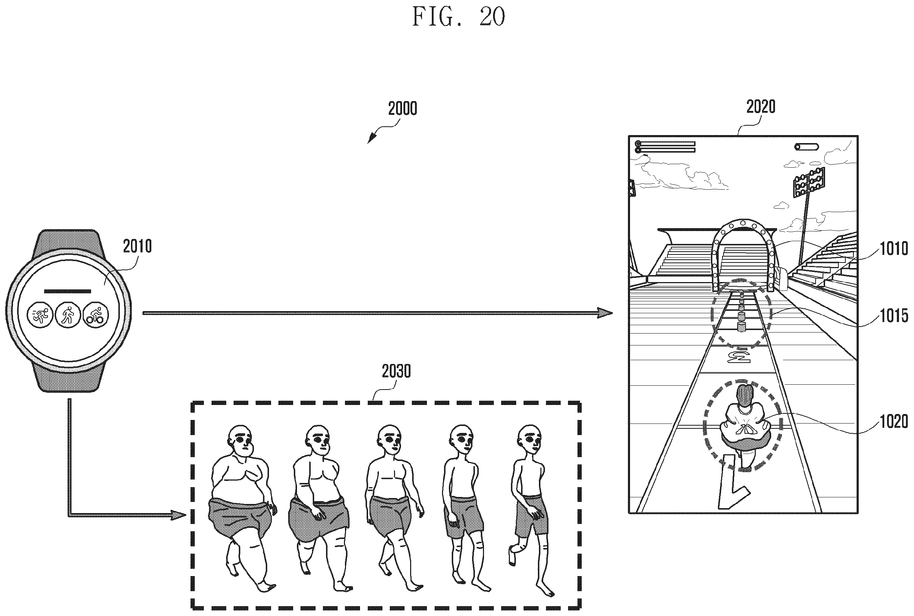

FIG. 20 is a diagram 2000 illustrating a method of executing an exercise-related content according to an embodiment of the disclosure.

Referring to FIG. 20, based on execution of an exercise-related content, an electronic device (e.g., electronic device 210 of FIG. 2 and FIG. 3) may connect to an external electronic device (e.g., external electronic device 220 of FIG. 2) for communication via a communication circuit (e.g., communication circuit 310 of FIG. 3).

In FIG. 20 according to various embodiments, a description will be provided on the assumption that the external electronic device 220 is a wearable electronic device, for example, a smart watch 2010.

According to an embodiment, a processor (e.g., processor 350 of FIG. 3) of the electronic device 210 may obtain exercise data from the smart watch 2010. According to an embodiment, the processor 350 may obtain exercise data from the smart watch 2010 at designated time intervals.

In FIG. 20 according to various embodiments, a description will be provided on the assumption that a user of the electronic device 210 performs walking in the state of wearing the smart watch 2010.

According to an embodiment, the processor 350 may obtain at least one piece of exercise data associated with walking, for example, the number of steps, a heart rate, and velocity data, from the smart watch 2010 connected for communication. However, the disclosure is not limited thereto.

According to an embodiment, the processor 350 may apply, to the exercise-related content, the exercise data obtained from the smart watch 2010. For example, the processor 350 may use the number of steps and velocity data, so as to enable logic in which the character 1020 displayed in the virtual space 2020 constituting the exercise-related content walks to the destination point 1010 and logic that obtains the item 1015 and increases a score when the user collides with the item 1015 while walking to the destination point 1010.

According to an embodiment, the processor 350 may perform control so as to calculate calories using the exercise data, for example, the number of steps, a heart rate, and/or velocity data, and to change a body shape of the character 1020 based on the calculated calories as shown in reference numeral 2030. For example, the processor 350 may calculate calories by using exercise data obtained at designated time intervals, for example, the number of steps, a heart rate, and/or velocity data, and may display the body shape of the character 1020 changed based on the calculated calories from a fat shape to a skinny state.

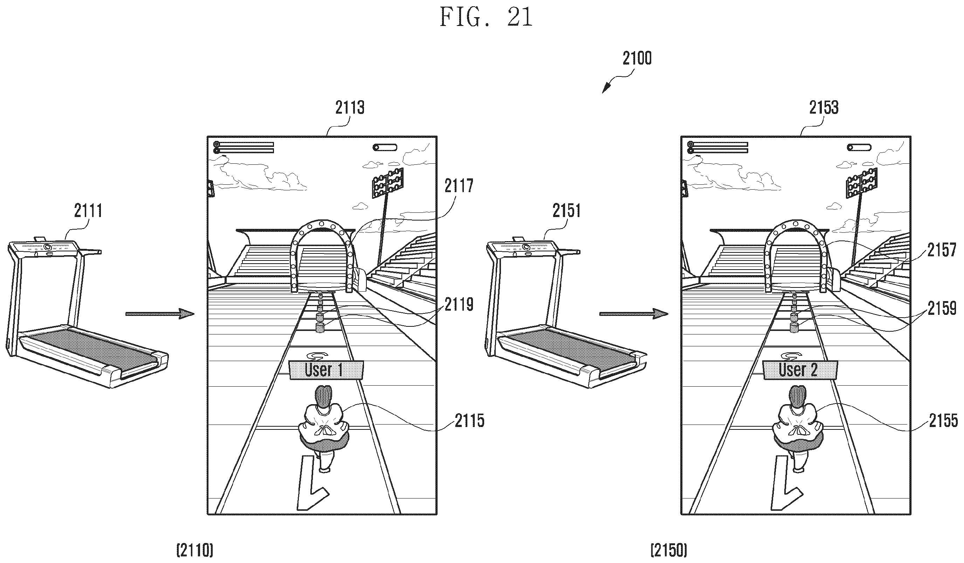

Although a method of executing an exercise-related content by using exercise data obtained from an external electronic device having a communication connection with the electronic device 210 has been described in various embodiments, the disclosure is not limited thereto. For example, the electronic device 210 may be connected to at least two external electronic devices for communication, and may provide a multi-play by using an exercise-related content. In this connection, various embodiments will be described with reference to FIGS. 21, 22, and 23.

FIG. 21 is a diagram 2100 illustrating a method of executing an exercise-related content according to an embodiment of the disclosure.

Referring to FIG. 21, an electronic device (e.g., electronic device 210 of FIG. 2 and FIG. 3) may be connected to at least two external electronic devices for communication via a communication circuit (e.g., communication circuit 310 of FIG. 3). For example, a description will be provided on the assumption that the at least two external electronic devices are exercise machines, for example, treadmills.

According to an embodiment, as illustrated in reference numeral 2110, a processor (e.g., processor 350 of FIG. 3) of the electronic device 210 may be connected to a first treadmill 2111 for communication. The processor 350 may receive first exercise data obtained by the first treadmill 2111, from the first treadmill 2111 connected for communication. For example, the first exercise data may include the number of steps and velocity data. However, the disclosure is not limited thereto. According to an embodiment, the processor 350 may apply the first exercise data received from the first treadmill 2111 to a virtual space 2113 constituting an exercise-related content. For example, the processor 350 may use the number of steps and velocity data, so as to enable logic in which a first character (e.g., user1) 2115 displayed in the virtual space 2113 constituting the exercise-related content walks to a destination point and logic that obtains an item 2119 and increases a score when the first character (e.g., user1) 2115 collides with the item 2119 while walking to a destination point 2117.

According to an embodiment, as illustrated in reference numeral 2150, the processor 350 may be connected to a second treadmill 2151 for communication. The processor 350 may receive second exercise data obtained by the second treadmill 2151, from the second treadmill 2151 connected for communication. For example, the second exercise data may include the number of steps and velocity data. However, the disclosure is not limited thereto. According to an embodiment, the processor 350 may apply the second exercise data received from the second treadmill 2151 to a virtual space 2153 constituting an exercise-related content. For example, the processor 350 may use the number of steps and velocity data, so as to enable logic in which a second character (e.g., user2) 2155 displayed in the virtual space 2153 constituting the exercise-related content walks to a destination point and logic that obtains an item 2159 and increases a score when the second character (e.g., user2) 2155 collides with the item 2159 while walking to a destination point 2157.

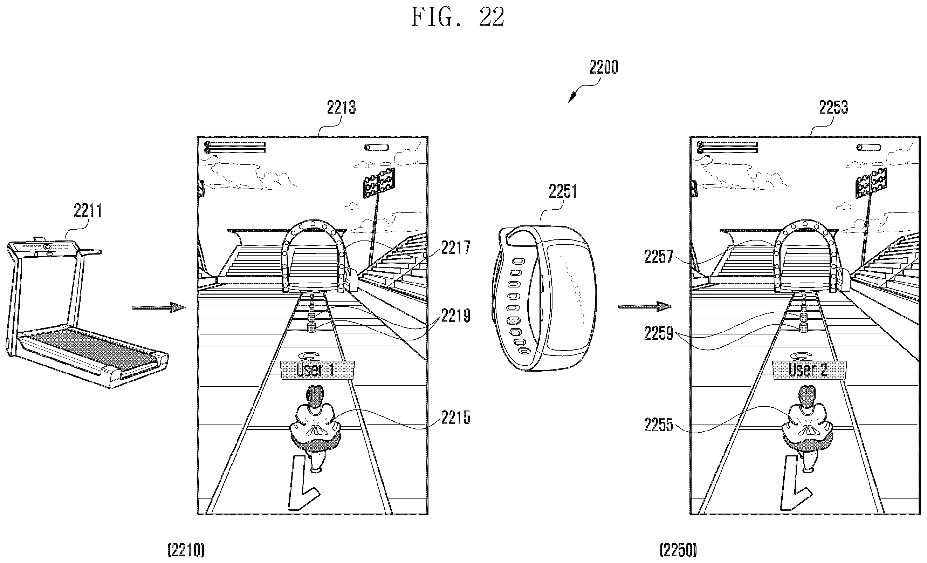

FIG. 22 is a diagram 2200 illustrating a method of executing an exercise-related content according to an embodiment of the disclosure.

Referring to FIG. 22, an electronic device (e.g., electronic device 210 of FIG. 2 and FIG. 3) may be connected to at least two external electronic devices for communication via a communication circuit (e.g., communication circuit 310 of FIG. 3). For example, a description will be provided on the assumption that the at least two external electronic devices are an exercise machine, for example, a treadmill 2211, and a wearable electronic device, for example, a smart watch 2251.

According to an embodiment, as illustrated in reference numeral 2210, a processor (e.g., processor 350 of FIG. 3) of the electronic device 210 may be connected to a treadmill 2211 for communication. The processor 350 may receive first exercise data obtained by the treadmill 2211, from the treadmill 2211 connected for communication. For example, the first exercise data may include the number of steps and velocity data. However, the disclosure is not limited thereto. According to an embodiment, the processor 350 may apply the first exercise data received from the treadmill 2211 to a virtual space 2213 constituting an exercise-related content. For example, the processor 350 may use the number of steps and velocity data, so as to enable logic in which a first character (e.g., user1) 2215 displayed in the virtual space 2213 constituting the exercise-related content walks to a destination point and logic that obtains an item 2219 and increases a score when the first character (e.g., user1) 2215 collides with the item 2219 while walking to a destination point 2217.

According to an embodiment, as illustrated in reference numeral 2250, the processor 350 may be connected to the smart watch 2251 for communication. The processor 350 may receive second exercise data obtained by the smart watch 2251, from the smart watch 2251 connected for communication. For example, the second exercise data may include the number of steps and velocity data. However, the disclosure is not limited thereto. According to an embodiment, the processor 350 may apply the second exercise data received from the smart watch 2251 to a virtual space 2253 constituting an exercise-related content. For example, the processor 350 may use the number of steps and velocity data, so as to enable logic in which a second character (e.g., user2) 2255 displayed in the virtual space 2253 constituting the exercise-related content walks to a destination point and logic that obtains an item 2259 and increases a score when the second character (e.g., user2) 2255 collides with the item 2259 while walking to a destination point 2257.

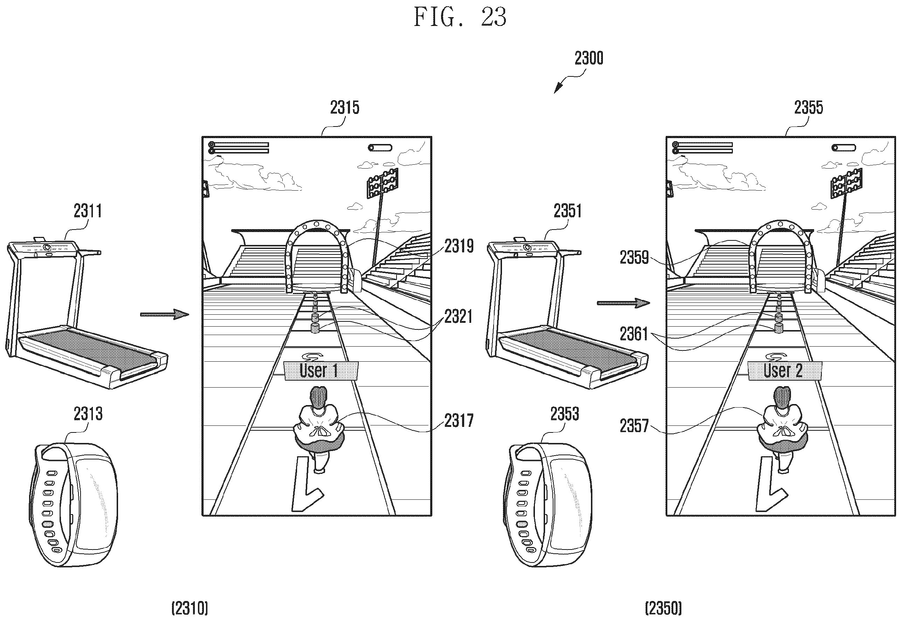

FIG. 23 is a diagram 2300 illustrating a method of executing an exercise-related content according to an embodiment of the disclosure.

Referring to FIG. 23, an electronic device (e.g., electronic device 210 of FIG. 2 and FIG. 3) may be connected to at least two external electronic devices for communication via a communication circuit (e.g., communication circuit 310 of FIG. 3). For example, a description will be provided on the assumption that the at least two external electronic devices are an exercise machine, for example, a treadmill, and a smart watch.

According to an embodiment, as illustrated in reference numeral 2310, a processor (e.g., processor 350 of FIG. 3) of the electronic device 210 may be connected to a treadmill 2311 and a smart watch 2313 for communication. The processor 350 may receive first exercise data obtained by the treadmill 2311, from the treadmill 2311 connected for communication, and may receive second exercise data obtained by the smart watch 2313, from the smart watch 2313. For example, the first exercise data may include the number of steps and velocity data. The second exercise data may include a heart rate, velocity data, and/or calories. However, the disclosure is not limited thereto. According to an embodiment, the processor 350 may apply the first exercise data received from the treadmill 2311 and the second exercise data received from the smart watch 2313, to a virtual space 2315 constituting an exercise-related content. For example, the processor 350 may use the number of steps, velocity data, heart rate, velocity data, and/or calories, so as to enable logic in which a first character (e.g., user1) 2317 displayed in the virtual space 2315 constituting the exercise-related content walks to a destination point, logic that obtains an item 2321 and increases a score when the first character (e.g., user1) 2317 collides with the item 2321 while walking to a destination point 2319, and logic that changes a body shape of the first character (e.g., user1) 2317 as the first character (e.g., user1) 2317 walks to the destination point 2319.

According to an embodiment, as illustrated in reference numeral 2350, the processor 350 may be connected to a treadmill 2351 and a smart watch 2353 for communication. The processor 350 may receive third exercise data obtained by the treadmill 2351, from the treadmill 2351 connected for communication, and may receive fourth exercise data obtained by the smart watch 2353, from the smart watch 2353. For example, the third exercise data may include the number of steps and velocity data. The fourth exercise data may include a heart rate, velocity data, and/or calories. However, the disclosure is not limited thereto. According to an embodiment, the processor 350 may apply the third exercise data received from the treadmill 2351 and the fourth exercise data received from the smart watch 2353, to a virtual space 2355 constituting an exercise-related content. For example, the processor 350 may use the number of steps, the velocity data, the heart rate, the velocity data, and/or the calories, so as to enable logic in which a second character (e.g., user2) 2357 displayed in the virtual space 2355 constituting the exercise-related content walks to a destination point, logic that obtains an item 2361 and increases a score when the second character (e.g., user2) 2357 collides with the item 2361 while walking to a destination point 2359, and logic that changes a body shape of the second character (e.g., user 1) 2357 as the second character (e.g., user 1) 2357 walks to the destination point 2359.

As illustrated in FIG. 21, FIG. 22, and FIG. 23 according to various embodiments, the processor 350 may be connected to at least two external electronic devices for communication, and may provide a multi-play using an exercise-related content. Accordingly, it may enable a plurality of users who execute an exercise-related content to have a match and thus, users' exercise capacities may be improved and a use rate of the exercise-related content may be increased.

A user interface according to performed logic, described in FIG. 21, FIG. 22, and FIG. 23 according to various embodiments, may be displayed on a display (e.g., display 330 of FIG. 3) of the electronic device 210, and/or may be displayed on a display (e.g., display 435 of FIG. 4) of an external electronic device (e.g., external electronic device 220 of FIG. 2 and FIG. 4) having a communication connection with the electronic device 210via a communication circuit (e.g., communication circuit 310 of FIG. 3), and/or a display (not illustrated).

According to various embodiments, scenarios according to the above-described FIGS. 2 to 23 will be described.

For example, when it is assumed that an exercise-related content is performed based on squats, the electronic device 210 may connect, based on execution of the exercise-related content, to the external electronic device 220, for example, a camera and/or wearable electronic device, for communication. Based on the connection to the camera and/or wearable electronic device for communication, the electronic device 210 may identify a user's exercise posture via a camera device. For example, the electronic device 210 may identify the number of times of exercises performed and/or the accuracy of an exercise posture, based on the user's exercise posture. In addition, the electronic device 210 may obtain exercise data based on motion information detected via the wearable electronic device. According to an embodiment, when it is identified that a squat is performed once based on the user's exercise posture (e.g., squat posture) and exercise data (e.g., the number of times of squats performed), the electronic device 210 may increase a squat count (increasing a squat count by 1) so as to increase a score. When it is identified that the squat is performed once, the electronic device 210 may enable a character to move one space closer to a destination point. In addition, the electronic device 210 may increase the score based on the accuracy of the squat posture. For example, the electronic device 210 may increase a score by assigning a higher score as the accuracy of a squat posture is higher. When proceeding with a multi-play together with a user of another electronic device according to the above-described scenario, the electronic device 210 may determine that a character that arrives at the destination point first wins.

According to another embodiment, when it is assumed that an exercise-related content is executed based on running, the electronic device 210 may connect, based on execution of the exercise-related content, to the external electronic device 220, for example, a treadmill and/or a wearable electronic device, for communication. Based on the connection to the treadmill and/or wearable electronic device for communication, the electronic device 210 may obtain exercise data from the treadmill and/or wearable electronic device. For example, the exercise data may include velocity data and a heart rate. When it is identified that the velocity data is greater than or equal to a first velocity (e.g., approximately 50km), the electronic device 210 may perform control so that a character is in the state of running at a first speed (e.g., approximately 10km/h). In addition, when it is identified that a heart rate is greater than or equal to a first heart rate (e.g., approximately 150bpm), the processor 150 may apply, to a character, a color and/or effect indicating that the heart rate is greater than or equal to the first heart rate, and may increase a score by assigning a bonus point. When it is identified that the velocity data is a second velocity (e.g., approximately 100km or higher) that is faster than a first velocity (e.g., approximately 50km), the electronic device 210 may perform control so that a character is in the state of running at a second speed (e.g., approximately 20km/h) that is faster than a first speed (e.g., approximately 10km/h). According to the above-described scenario, the electronic device 210 may determine that a character that arrives at a destination point first between the first character and the second character wins. The disclosure is not limited thereto, and a property of a character may be changed based on exercise data. For example, the exercise data may include an exercise time, an exercise distance, and calories, and the property of the character may include a body shape, an exercise level/exercise experience, an exercise capability, and/or fatigue of the character. When it is identified that a calorie consumption is a first calorie (e.g., approximately 200Kcal), the electronic device 210 may decrease a body shape index of the character by a first value (e.g., 5), may change the body shape of the character to a skinny state based on the decreased body shape index, and may display the same. In addition, when it is identified that an average running pace reaches a first value (e.g., approximately 20m/s) based on an exercise time and exercise distance, the processor 350 may increase an exercise capability by a second value (e.g., 10).

A method of producing an exercise-related content by the electronic device 210 according to an embodiment may include an operation of displaying a user interface including at least one object on the display 330. The method of producing the exercise-related content by the electronic device 210 according to an embodiment may include an operation of generating a virtual space related to at least one exercise by using the at least one object. The method of producing the exercise-related content by the electronic device 210 according to an embodiment may include an operation of writing logic of an exercise-related content to be performed by using the at least one object disposed in the virtual space. The method of producing the exercise-related content by the electronic device 210 according to an embodiment may include an operation of obtaining at least one piece of exercise data associated with a selected exercise device, based on an input to select one from at least one exercise device to be performed based on the written logic. The method of producing the exercise-related content by the electronic device 210 according to an embodiment may include an operation of performing debugging of the written logic by using the at least one piece of obtained exercise data. The method of producing the exercise-related content by the electronic device 210 according to an embodiment may include an operation of generating an exercise-related content based on the logic, and storing the generated exercise-related content.

According to an embodiment, the at least one exercise device may include at least one of: at least one exercise device connected for communication via the communication circuit 310, a virtual exercise device, or at least one exercise device having a communication connection with the server 230.

According to an embodiment, the operation of obtaining the at least one piece of exercise data associated with the selected exercise device may include, when an input to select at least one exercise device connected for communication via the communication circuit 310 among the at least one exercise device is detected, an operation of obtaining at least one piece of measured exercise data from the at least one selected exercise device.

According to an embodiment, the operation of obtaining the at least one piece of exercise data associated with the selected exercise device may include, when an input to select the virtual exercise device among the at least one exercise device is detected, an operation of obtaining at least one piece of exercise data configured for the virtual exercise device.

According to an embodiment, the operation of obtaining the at least one piece of exercise data associated with the selected exercise device may include, when an input to select at least one exercise device having a communication connection with the server 230 among the at least one exercise device is detected, an operation of receiving, via the server 230, at least one piece of exercise data measured by the at least one exercise device having a communication connection with the server 230 and obtaining the at least one piece of exercise data.

The method of producing the exercise-related content by the electronic device 210 according to an embodiment may further include an operation of obtaining at least one piece of exercise data from the memory 320 or the server 230, when an input to obtain at least one piece of exercise data stored in the memory 320 of the electronic device 210 or the server 230 is detected after the logic is written.

According to an embodiment, the operation of writing the logic of the exercise-related content may include an operation of writing logic of an exercise-related content by using at least one of a script scheme or a block coding scheme.

According to an embodiment, the operation of storing the generated exercise-related content may further include an operation of generating the exercise-related content based on the logic when a debugging result shows that no error occurs.

The method of producing the exercise-related content by the electronic device 210 according to an embodiment may further include an operation of identifying logic with an error when the debugging result shows that an error occurs. The method of producing the exercise-related content by the electronic device 210 according to an embodiment may further include an operation of correcting the logic with the error. The method of producing the exercise-related content by the electronic device 210 according to an embodiment may further include an operation of performing debugging of the corrected logic.

The method of producing the exercise-related content by the electronic device 210 according to an embodiment may further include an operation of uploading the generated exercise-related content to the server 230, and storing the generated exercise-related content in the server 230.

The method of producing the exercise-related content by the electronic device 210 according to an embodiment may further include an operation of displaying, based on execution of the stored exercise-related content, a screen associated with a virtual space corresponding to the executed exercise-related content on the display (330). The method of producing the exercise-related content by the electronic device 210 according to an embodiment may further include an operation of obtaining at least one of first exercise data associated with the electronic device 210 or second exercise data associated with the at least one exercise device. The method of producing the exercise-related content by the electronic device 210 according to an embodiment may further include an operation of changing at least one object included in the virtual space according to logic corresponding to the executed exercised-related content, based on the at least one of the obtained first exercise data or the obtained second exercise data.

According to an embodiment, the operation of obtaining the at least one of the first exercise data associated with the electronic device 210 or second exercise data associated with the at least one exercise device may include an operation of obtaining at least one of the first exercise data associated with the electronic device 210 or the second exercise data associated with at least one exercise device at designated time intervals.

A non-transitory computer-readable medium storing instructions which, when executed by the processor 350 of the electronic device 210 according to an embodiment, cause the processor 350 to perform operations may perform an operation of displaying a user interface including at least one object on the display 330. The non-transitory computer-readable medium storing instructions which, when executed by the processor 350 of the electronic device 210, cause the processor 350 to perform operations may perform an operation of generating a virtual space related to at least one exercise by using the at least one object. The non-transitory computer-readable medium storing instructions which, when executed by the processor 350 of the electronic device 210, cause the processor 350 to perform operations may perform an operation of writing logic of an exercise-related content to be performed by using the at least one object disposed in the virtual space. The non-transitory computer-readable medium storing instructions which, when executed by the processor 350 of the electronic device 210, cause the processor 350 to perform operations may perform an operation of obtaining at least one piece of exercise data associated with a selected exercise device based on an input to select one from at least one exercise device to be performed based on the written logic. The non-transitory computer-readable medium storing instructions which, when executed by the processor 350 of the electronic device 210, cause the processor 350 to perform operations may perform an operation of performing debugging of the written logic by using the at least one piece of obtained exercise data. The non-transitory computer-readable medium storing instructions which, when executed by the processor 350 of the electronic device 210, cause the processor 350 to perform operations may perform an operation of generating an exercise-related content based on the logic, and storing the generated exercise-related content.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (210) comprising:
a display (330);
memory (320) storing instructions; and
a processor (350);
wherein the instructions, when executed by the processor (350), cause the electronic device (210) to:
display, on the display (330), a user interface including at least one object;
generate a virtual space related to at least one exercise by using the at least one object;
write logic of an exercise-related content to be performed using the at least one object disposed in the virtual space;
obtain at least one piece of exercise data associated with a selected exercise device based on an input to select one among at least one exercise device to be performed based on the written logic;
perform debugging of the written logic by using the at least one piece of obtained exercise data; and
generate an exercise-related content based on the logic and store the generated exercise-related content in the memory (320).

2. The electronic device of claim 1, further comprising a communication circuit (310),
wherein the at least one exercise device comprises at least one of: at least one exercise device connected for communication via the communication circuit (310), a virtual exercise device, or at least one exercise device having a communication connection with a server (230).

3. The electronic device of claim 2, wherein the instructions, when executed by the processor (350), cause the electronic device (210) to:
in case that an input to select at least one exercise device connected for communication via the communication circuit (310) among the at least one exercise device is detected, obtain at least one piece of exercise data measured from the at least one selected exercise device;
in case that an input to select the virtual exercise device among the at least one exercise device is detected, obtain at least one piece of exercise data configured for the virtual exercise device; and
in case that an input to select at least one exercise device having a communication connection with the server (230) among the at least one exercise device is detected, receive, via the server (230), at least one piece of exercise data measured by the at least one exercise device having a communication connection with the server (230) so as to obtain the at least one piece of exercise data.

4. The electronic device of any of claims 1 to 3, wherein the instructions, when executed by the processor (350), cause the electronic device (210) to obtain at least one piece of exercise data from the memory (320) or the server (230) in case that an input to obtain at least one piece of exercise data stored in the memory (320) or the server (230) is detected after the logic is written.

5. The electronic device of any of claims 1 to 4, wherein the instructions, when executed by the processor (350), cause the electronic device (210) to write logic of the exercise-related content by using at least one of a script scheme or a block coding scheme.

6. The electronic device of any of claims 1 to 5, wherein the instructions, when executed by the processor (350), cause the electronic device (210) to:
generate the exercise-related content based on the logic in case that a debugging result shows that no error occurs; and
identify logic with an error in case that the debugging result shows that an error occurs, correct the logic with the error, and perform debugging of the corrected logic.

7. The electronic device of any of claims 1 to 6, wherein the instructions, when executed by the processor (350), cause the electronic device (210) to upload the generated exercise-related content to the server (230), and store the generated exercise-related content in the server (230).

8. The electronic device of any of claims 1 to 7, wherein the instructions, when executed by the processor (350), cause the electronic device (210) to:
based on execution of the stored exercise-related content, display a screen associated with a virtual space corresponding to the executed exercise-related content on the display (330);
obtain at least one of first exercise data associated with the electronic device (210) or second exercise data associated with the at least one exercise device;
based on the at least one of the obtained first exercise data or the obtained second exercise data, change at least one object included in the virtual space according to logic corresponding to the executed exercised-related content; and
obtain at least one of the first exercise data or the second exercise data at designated time intervals.

9. A method of producing an exercise-related content by an electronic device (210), the method comprising:
displaying, on a display (330), a user interface including at least one object;
generating a virtual space related to at least one exercise by using the at least one object;
writing logic of an exercise-related content to be performed by using the at least one object disposed in the virtual space;
based on an input to select one among at least one exercise device to be performed based on the written logic, obtaining at least one piece of exercise data associated with the selected exercise device;
performing debugging of the written logic by using the at least one piece of obtained exercise data; and
generating an exercise-related content based on the logic, and storing the generated exercise-related content.

10. The method of claim 9, wherein the at least one exercise device comprises at least one of: at least one exercise device connected for communication via a communication circuit (310), a virtual exercise device, or at least one exercise device having a communication connection with a server (230), and
wherein the obtaining of the at least one piece of exercise data associated with the selected exercise device comprises:
in case that an input to select at least one exercise device connected for communication via the communication circuit (310) among the at least one exercise device is detected, obtaining at least one piece of exercise data measured from the at least one selected exercise device;
in case that an input to select the virtual exercise device among the at least one exercise device is detected, obtaining at least one piece of exercise data configured for the virtual exercise device; and
in case that an input to select at least one exercise device having a communication connection with the server (230) among the at least one exercise device is detected, receiving, via the server (230), at least one piece of exercise data measured by the at least one exercise device having a communication connection with the server (230) and obtaining the at least one piece of exercise data.

11. The method of any of claims 9 and 10, further comprising obtaining at least one piece of exercise data from a memory (320) of the electronic device (210) or the server (230), in case that an input to obtain at least one piece of exercise data stored in the memory (320) of the electronic device (210) or the server (230) is detected after the logic is written.

12. The method of any of claims 9 to 11, wherein the storing of the generated exercise-related content further comprises:
generating the exercise-related content based on the logic in case that a debugging result shows that no error occurs; and
identifying logic with an error in case that the debugging result shows that an error occurs, correcting the logic with the error, and performing debugging of the corrected logic.

13. The method of any of claims 9 to 12, further comprising uploading the generated exercise-related content to the server (230), and storing the generated exercise-related content in the server (230).

14. The method of any of claims 9 to 13, further comprising:
based on execution of the stored exercise-related content, displaying a screen associated with a virtual space corresponding to the executed exercise-related content on the display (330);
obtaining at least one of first exercise data associated with the electronic device (210) or second exercise data associated with the at least one exercise device; and
based on the at least one of the obtained first exercise data or the obtained second exercise data, changing at least one object included in the virtual space according to logic corresponding to the executed exercised-related content.

15. A non-transitory computer-readable medium storing instructions which, when executed by a processor (350) of an electronic device (210), cause the processor (350) to perform operations comprising:
displaying, on a display (330), a user interface including at least one object;
generating a virtual space related to at least one exercise by using the at least one object;
writing logic of an exercise-related content to be performed by using the at least one object disposed in the virtual space;
based on an input to select one among at least one exercise device to be performed based on the written logic, obtaining at least one piece of exercise data associated with the selected exercise device;
performing debugging of the written logic by using the at least one piece of obtained exercise data; and
generating an exercise-related content based on the logic, and storing the generated exercise-related content.
